# EUROPÄISCHE PATENTSCHRIFT

(11) **EP 2 524 442 B1**
(45) Veröffentlichungstag und Bekanntmachung des Hinweises auf die Patenterteilung: **10.10.2018**
(21) Anmeldenummer: 11708017.6
(22) Anmeldetag: 01.03.2011
(51) Int. Cl.: H04B 1/7183

(54) **VERFAHREN UND VORRICHTUNG ZUM DRAHTLOSEN ÜBERTRAGEN VON DATENPAKETEN**
METHOD AND APPARATUS FOR WIRELESS DATA TRANSMISSION
PROCEDE ET DISPOSITIF POUR LA TRANSMISSION DE DONNEES SANS FIL DE

(30) Priorität: 01.03.2010 DE 102010009678
(43) Veröffentlichungstag der Anmeldung: 21.11.2012
(73) Patentinhaber: Siemens Aktiengesellschaft, 80333 München (DE)
(72) Erfinder: HUND, Johannes, 80804 München (DE); HEINRICH, Andreas, 71032 Böblingen (DE); HUCKENHOLZ, Stephan, 81379 München (DE); SCHWINGENSCHLÖGL, Christian, 85640 Putzbrunn (DE)
(86) Internationale Anmeldenummer: PCT/EP2011/053020
(87) Internationale Veröffentlichungsnummer: WO 2011/107471

(56) Entgegenhaltungen:
- EP-A1- 1 928 119
- OLONBAYAR S ET AL: "Synchronisation performance of wireless sensor networks", ULTRA-WIDEBAND, 2008. ICUWB 2008. IEEE INTERNATIONAL CONFERENCE ON, IEEE, PISCATAWAY, NJ, USA, 10. September 2008 (2008-09-10), Seiten 59-62, XP031350147, ISBN: 978-1-4244-2216-6
- SUNG-YOON JUNG ET AL: "Design of Preamble Signal for Synchronization with UWB Non-coherent Energy Detection Receiver", ULTRA-WIDEBAND, 2005 IEEE INTERNATIONAL CONFERENCE ON ZURICH, SWITZERLAND 05-08 SEPT. 2005, PISCATAWAY, NJ, USA,IEEE, 5. September 2005 (2005-09-05), Seiten 464-468, XP010872642, DOI: DOI:10.1109/ICU.2005.1570032 ISBN: 978-0-7803-9397-4
- JIAN XING LEE ET AL: "UWB piconet interference suppression using clustered ternary orthogonal signaling scheme", ULTRA-WIDEBAND, 2009. ICUWB 2009. IEEE INTERNATIONAL CONFERENCE ON, IEEE, PISCATAWAY, NJ, USA, 9. September 2009 (2009-09-09), Seiten 83-87, XP031547625, ISBN: 978-1-4244-2930-1
- YIYIN WANG ET AL: "TOA estimation using UWB with low sampling rate and clock drift calibration", ULTRA-WIDEBAND, 2009. ICUWB 2009. IEEE INTERNATIONAL CONFERENCE ON, IEEE, PISCATAWAY, NJ, USA, 9. September 2009 (2009-09-09), Seiten 612-617, XP031547611, ISBN: 978-1-4244-2930-1
- JOHANNES HUND ET AL: "Evaluation and optimization of robustness in the IEEE 802.15.4a standard", ULTRA-WIDEBAND (ICUWB), 2010 IEEE INTERNATIONAL CONFERENCE ON, IEEE, PISCATAWAY, NJ, USA, 20. September 2010 (2010-09-20), Seiten 1-4, XP031785033, ISBN: 978-1-4244-5305-4

## Beschreibung

Die Erfindung betrifft ein Verfahren zum drahtlosen Übertragen von Datenpaketen eines Netzwerkknotens in einem Steuernetzwerk gemäß den Oberbegriffen der Patentansprüche 1 und 2, eine Vorrichtung zum drahtlosen Übertragen von Datenpaketen eines Netzwerkknotens in einem Steuernetzwerk gemäß den Oberbegriffen der Patentansprüche 16 und 17, einen Netzwerkknoten zum drahtlosen Übertragen von Datenpaketen gemäß den Oberbegriffen der Patentansprüche 18 und 19 sowie ein drahtloses Steuernetzwerk zum drahtlosen Übertragen von Datenpaketen gemäß den Oberbegriffen der Patentansprüche 20 und 21.

Bei der drahtlosen Kommunikation zwischen Netzwerkknoten eines Steuernetzwerkes, beispielsweise zur Steuerung von Maschinen, werden über Funkschnittstellen Datenpakete übertragen. Die drahtlose Kommunikation zur Maschinesteuerung erfordert einerseits sehr geringe Latenzzeiten und andererseits eine sehr hohe Datenübertragungszuverlässigkeit. Weiterhin ist es notwendig, dass das Steuernetzwerk mit anderen drahtlosen Netzwerken koexistieren kann, insbesondere, wenn das Steuernetzwerk als ein übergeordnetes Steuernetzwerk dient. Die Bereitstellung einer hohen Datenübertragungszuverlässigkeit stellt dabei eine technische Herausforderung dar, da die meisten herkömmlichen Maßnahmen zur Erhöhung der Zuverlässigkeit bei der Datenübertragung die Latenzzeit erhöhen. Weiterhin stellen industrielle Fertigungsanlagen mit Maschinen, die durch ein Steuernetzwerk gesteuert werden, für die drahtlose Kommunikation über Funkschnittstellen eine schwierige Umgebung dar. Bei Fertigungsanlagen, beziehungsweise industriellen Fertigungszellen mit Maschinen, sind Metalloberflächen vorhanden, bei welchen die Datenübertragungssignale gebrochen beziehungsweise reflektiert werden, sodass ein relativ hohes elektromagnetisches Rauschen vorhanden ist. Durch die reflektierenden Metalloberflächen kommt es zu einer so genannten Multipfadsignalausbreitung.

Herkömmliche Funknetzwerktechnologien, wie beispielsweise Bluetooth oder IEEE 802.15.4 sind aufgrund der oben genannten Probleme für Steuernetzwerke, insbesondere in industriellen Fertigungsumgebungen, beziehungsweise Fabrikautomatisierung kaum geeignet.

Es wurde daher eine Datenübertragung nach dem Standard IEEE 802.15.4a vorgeschlagen, in denen Datenpakete drahtlos zwischen Netzwerkknoten eines Steuernetzwerks übertragen werden. Es hat sich allerdings herausgestellt, dass es bei der Datenpaketübertragung gemäß dem Standard IEEE 802.15.4 zu einer hohen Datenpaketverlustrate kommt. Die hohen Datenpaketverlustraten werden dabei vor allem durch falsch erkannte Präambeln in den Headern der Datenpakete hervorgerufen. Die geschieht insbesondere bei Empfängern von Netzwerkknoten, die mittels Energiedetektion arbeiten.

Die Druckschrift « OLONBAYAR S ET AL: "Synchronisation performance of wireless sensor networks", ULTRA-WIDEBAND, 2008. ICUWB 2008. IEEE INTERNATIONAL CONFERENCE ON, IEEE, PISCATAWAY, NJ, USA, 10. September 2008, Seiten 59-62, » offenbart ein Verfahren zum drahtlosen Übertragen von Datenpaketen zwischen Netzwerkknoten eines Steuernetzwerkes, bei dem die Datenpakete zur Synchronisation jeweils eine Präambel aufweisen, die aus einer vorbestimmten Anzahl von Präambelsymbolen besteht und bei dem jedes Präambel-Subsymbol eines Präambelsymbols der Präambel durch die Phasenlage eines übertragenen Einzelsignalimpulses kodiert wird.

In der Druckschrift << SUNG-YOON JUNG ET AL: "Design of Preamble Signal for Synchronization with UWB Non-coherent Energy Detection Receiver", ULTRA-WIDEBAND, 2005 IEEE INTERNATIONAL CONFERENCE ON ZÜRICH, SWITZERLAND 05-08 Sept. 2005, PISCATAWAY, NJ, USA, IEEE, 5. September 2005, Seiten 464-468, >> wird die Struktur eines Präambel-Signals aus einer Vielzahl von Einzelsignalimpulsen beschrieben, welches gegebenenfalls mehrfach wiederholt werden kann.

In der Druckschrift << JIAN XING LEE ET AL: "UWB piconet interference suppression using clustered ternary orthogonal signaling scheme", ULTRA-WIDEBAND, 2009. ICUWB 2009. IEEE INTERNATIONAL CONFERENCE ON, IEEE, PISCATAWAY, NJ, USA, 9. September 2009, Seiten 83-87, >> wird eine Übertragung basierend auf ternären Codesequenzen beschrieben, bei der die Polarität einer Codesequenz durch ein Cluster von Impulsen repräsentiert wird.

In dem Dokument << YIYIN WANG ET AL: "TOA estimation using UWB with low sampling rate and clock drift calibration", ULTRA-WIDEBAND, 2009. ICUWB 2009. IEEE INTERNATIONAL CONFERENCE ON, IEEE, PISCATAWAY, NJ, USA, 9. September 2009, Seiten 612-617, >> wird eine Präambel beschrieben, welche sich aus Clustern zusammensetzt, deren Symbole durch Einzelsignalimpulse kodiert sind.

Es ist daher eine Aufgabe der vorliegenden Erfindung ein Verfahren zum drahtlosen Übertragen von Datenpaketen eines Netzwerkknotens in einem Steuernetzwerk, Vorrichtung zum drahtlosen Übertragen von Datenpaketen eines Netzwerkknotens in einem Steuernetzwerk, einen Netzwerkknoten zum drahtlosen Übertragen von Datenpaketen und ein drahtloses Steuernetzwerk zum drahtlosen Übertragen von Datenpaketen zu schaffen, bei der Datenpakete auch in einer industriellen Umgebung mit einer geringen Datenpaketverlustrate einerseits zuverlässig und andererseits flexibel in Bezug auf verwendete Betriebsmodi der Datenpaketübertragung zwischen Netzwerkknoten eines Steuernetzwerkes übertragen werden können.

Diese Aufgabe wird sowohl ausgehend von dem im Oberbegriff des Patentanspruches 1 definierten Verfahren durch die im Kennzeichen des Patentanspruches 1 angegebenen Merkmale als auch ausgehend von dem im Oberbegriff des Patentanspruches 2 definierten Verfahren durch die im Kennzeichen des Patentanspruches 2 angegebenen Merkmale gelöst.

Darüber hinaus wird diese Aufgabe sowohl ausgehend von der im Oberbegriff des Patentanspruches 16 definierten Vorrichtung durch die im Kennzeichen des Patentanspruches 16 angegebenen Merkmale als auch ausgehend von der im Oberbegriff des Patentanspruches 17 definierten Vorrichtung durch die im Kennzeichen des Patentanspruches 17 angegebenen Merkmale gelöst.

Weiterhin wird diese Aufgabe sowohl ausgehend von dem im Oberbegriff des Patentanspruches 18 definierten Netzwerkknoten durch die im Kennzeichen des Patentanspruches 18 angegebenen Merkmale als auch ausgehend von dem im Oberbegriff des Patentanspruches 19 definierten Netzwerkknoten durch die im Kennzeichen des Patentanspruches 19 angegebenen Merkmale gelöst.

Außerdem wird diese Aufgabe sowohl ausgehend von dem im Oberbegriff des Patentanspruches 20 definierten drahtlosen Steuernetzwerk durch die im Kennzeichen des Patentanspruches 20 angegebenen Merkmale als auch ausgehend von dem im Oberbegriff des Patentanspruches 21 definierten drahtlosen Steuernetzwerk durch die im Kennzeichen des Patentanspruches 21 angegebenen Merkmale gelöst.

Die Erfindung schafft ein Verfahren zum drahtlosen Übertragen von Datenpaketen eines Netzwerkknotens in einem Steuernetzwerk sowie eine Vorrichtung zum drahtlosen Übertragen von Datenpaketen eines Netzwerkknotens in einem Steuernetzwerk, mit entsprechend ausgebildeten und miteinander verbundenen Mitteln zur Steuerung der Datenpaketübertragung, wobei die Datenpakete zur Synchronisation jeweils eine Präambel aufweisen, die aus einer vorbestimmten Anzahl von Präambelsymbolen besteht,
wobei in einem ersten Betriebsmodus jedes Präambel-Subsymbol eines Präambelsymbols der Präambel durch die Phasenlage eines übertragenen Einzelsignalimpulses kodiert wird,
wobei in einem zweiten Betriebsmodus zur Erhöhung einer Signalerkennungsleistung der in dem Datenpaket übertragenen Präambel anstatt eines Einzelsignalimpulses eine aus einer vorbestimmten Anzahl N aufeinanderfolgenden Einzelsignalimpulsen gleicher Phasenlage bestehende Signalimpulsfolge zur Kodierung des Präambel-Subsymbols übertragen wird, bei welcher der Einzelsignalimpuls mehrfach wiederholt wird und wobei der Netzwerkknoten entweder zwischen den beiden Betriebsmodi umgeschaltet oder für einen bestimmten Betriebsmodus der beiden Betriebsmodi, insbesondere den zweiten Betriebsmodus, vorkonfiguriert wird.

Durch die Umschaltbarkeit bzw. die bevorzugte Vorkonfiguration bei dem erfindungsgemäßen Verfahren bzw. bei der erfindungsgemäßen Vorrichtung kann ein zum ersten Betriebsmodus zusätzlich eingeführter zweiter Betriebsmodus, der die Erkennung der Präambel erleichtert und somit die Datenpaketverlustrate signifikant reduziert, gezielt, orientiert an die Gegebenheiten und Bedürfnisse bei der drahtlosen Übertragung von Datenpaketen zwischen Netzwerkknoten eines Steuernetzwerkes eingesetzt werden.

Bei einer möglichen Ausführungsform des erfindungsgemäßen Verfahrens bzw. der erfindungsgemäßen Vorrichtung wird in dem ersten Betriebsmodus der Einzelsignalimpuls von einer Signalpause gefolgt, die zur Vermeidung einer Intersymbolinterferenz (ISI) zwischen den Präambel-Subsymbolen vorgesehen ist.

Bei einer möglichen Ausführungsform des erfindungsgemäßen Verfahrens bzw. der erfindungsgemäßen Vorrichtung wird auch in dem zweiten Betriebsmodus die Signalimpulsfolge jeweils von einer Signalpause gefolgt, die zur Vermeidung einer Intersymbolinterferenz (ISI) zwischen den Präambel-Subsymbolen vorgesehen ist.

Bei einer möglichen Ausführungsform des erfindungsgemäßen Verfahrens bzw. der erfindungsgemäßen Vorrichtung wird jedes

Präambelsymbol der Präambel durch eine vorbestimmte Anzahl von Präambel-Subsymbolen ternär kodiert.

Bei einer möglichen Ausführungsform des erfindungsgemäßen Verfahrens bzw. der erfindungsgemäßen Vorrichtung weist der Einzelsignalimpuls in dem ersten Betriebsmodus ein Vorzeichen auf.

Bei einer weiteren möglichen Ausführungsform des erfindungsgemäßen Verfahrens bzw. der erfindungsgemäßen Vorrichtung weisen auch die Signalimpulse der Signalimpulsfolge in dem zweiten Betriebsmodus jeweils ein Vorzeichen auf.

Bei einer weiteren möglichen Ausführungsform des erfindungsgemäßen Verfahrens bzw. der erfindungsgemäßen Vorrichtung weist jedes Präambel-Subsymbol in dem ersten Betriebsmodus einen Einzelsignalimpuls mit einer vorbestimmten Impulszeitdauer auf, wobei der Einzelsignalimpuls von einer Signalpause gefolgt wird, deren Zeitdauer um einen ersten Spreizfaktor länger ist als die Impulszeitdauer des Einzelsignalimpulses.

Bei einer weiteren möglichen Ausführungsform des erfindungsgemäßen Verfahrens bzw. der erfindungsgemäßen Vorrichtung weist jedes Präambel-Subsymbol in dem zweiten Betriebsmodus die aus der vorbestimmten Anzahl von aufeinander folgenden Einzelsignalimpulsen gleicher Phasenlage bestehende Signalimpulsfolge auf, wobei jeder Einzelsignalimpuls der Signalimpulsfolge eine vorbestimmte Impulszeitdauer aufweist.

Bei einer weiteren möglichen Ausführungsform des erfindungsgemäßen Verfahrens bzw. der erfindungsgemäßen Vorrichtung wird die Signalimpulsfolge von einer Signalpause gefolgt, deren Zeitdauer um einen zweiten Spreizfaktor länger ist als die Zeitdauer der Signalimpulsfolge.

Bei einer weiteren möglichen alternativen Ausführungsform des erfindungsgemäßen Verfahrens bzw. der erfindungsgemäßen Vorrichtung wird die Signalimpulsfolge von einer Signalpause gefolgt, deren Zeitdauer der Zeitdauer eines Präambel-Subsymbols in dem ersten Betriebsmodus abzüglich der Zeitdauer der Signalimpulsfolge entspricht.

Bei einer möglichen Ausführungsform des erfindungsgemäßen Verfahrens bzw. der erfindungsgemäßen Vorrichtung wird in dem ersten Betriebsmodus jedes Präambel-Subsymbol eines Präambelsymbols der Präambel standardkonform entsprechend dem Standard IEEE 802.15.4a durch die Phasenlage eines übertragen Einzelsignalimpulses kodiert.

Bei einer weiteren möglichen Ausführungsform des erfindungsgemäßen Verfahrens bzw. der erfindungsgemäßen Vorrichtung weisen der in dem ersten Betriebsmodus übertragene Einzelsignalimpuls und die in dem zweiten Betriebsmodus übertragenen Signalimpulse der Signalimpulsfolge eine Pulsform auf, deren Phasenlage sich eindeutig aus der Polarität einer spektralen Impulsantwort ergibt.

Bei einer weiteren möglichen Ausführungsform des erfindungsgemäßen Verfahrens bzw. der erfindungsgemäßen Vorrichtung ist die Pulsform eine Gauss-Pulsform.

Bei einer weiteren möglichen Ausführungsform des erfindungsgemäßen Verfahrens bzw. der erfindungsgemäßen Vorrichtung ist die Pulsform eine Gauss-Doublet-Pulsform.

Bei einer weiteren möglichen Ausführungsform des erfindungsgemäßen Verfahrens bzw. der erfindungsgemäßen Vorrichtung ist die Pulsform eine Root-Raised Cosine Pulsform.

Bei einer weiteren möglichen Ausführungsform des erfindungsgemäßen Verfahrens bzw. der erfindungsgemäßen Vorrichtung weist die Präambel des Datenpaketes einen Synchronisationsheader mit 2ⁿ¹ Präambelsymbolen und einen Start Frame Delimiter (SFD) mit 2ⁿ² Präambelsymbolen auf, wobei n1, n2 natürliche Zahlen sind.

Bei einer weiteren möglichen Ausführungsform des erfindungsgemäßen Verfahrens bzw. der erfindungsgemäßen Vorrichtung wird anhand des empfangenen Synchronisationsheaders der Präambel mittels einer SYNC-Korrelations-einrichtung ein erster Korrelationswert berechnet, in dessen Abhängigkeit ein Empfangsverstärker des Netzwerkknotens innerhalb eines Steuernetzwerkes eingestellt wird.

Bei einer weiteren möglichen Ausführungsform des erfindungsgemäßen Verfahrens bzw. der erfindungsgemäßen Vorrichtung wird anhand des empfangenen Startframe Delimiters (SFD) der Präambel mittels einer SFD-Korrelations-einrichtung ein zweiter Korrelationswert zur Detektion des Beginns von Nutzdaten innerhalb des empfangenen Datenpaketes berechnet.

Bei einer weiteren möglichen Ausführungsform des erfindungsgemäßen Verfahrens bzw. der erfindungsgemäßen Vorrichtung beträgt die Impulszeitdauer des Einzelsignalimpulses etwa 2 nsec.

Bei einer weiteren möglichen Ausführungsform des erfindungsgemäßen Verfahrens bzw. der erfindungsgemäßen Vorrichtung beträgt in dem zweiten Betriebsmodus die Anzahl N der aufeinander folgenden Einzelsignalimpulse der Signalimpulsfolge N = 4.

Die Erfindung schafft ferner einen Netzwerkknoten mit den in den Patentansprüchen 18 und 19 angegebenen Merkmalen sowie ein drahtloses Steuernetzwerk mit Netzwerkknoten mit den im Patentansprüchen 21 und 22 angegebenen Merkmalen.

Bei einer möglichen Ausführungsform des erfindungsgemäßen drahtlosen Steuernetzwerkes bildet das drahtlose Steuernetzwerk in dem ersten Betriebsmodus ein IEEE 802.15.4a Netzwerk.

Im Weiteren werden mögliche Ausführungsformen des erfindungsgemäßen Verfahrens, der erfindungsgemäßen Vorrichtung, des erfindungsgemäßen Netzwerkknotens und des erfindungsgemäßen drahtlosen Steuernetzwerks unter Bezugnahme auf die beigefügten Figuren näher erläutert.

Es zeigen:
- Fig. 1: ein Blockschaltbild eines Ausführungsbeispiels eines in dem erfindungsgemäßen drahtlosen Steuernetzwerks verwendeten Netzwerkknotens;
- Fig. 2: ein Blockschaltbild eines Ausführungsbeispiels für einen in dem in Fig. 1 dargestellten Netzwerkknoten verwendeten Empfänger;
- Fig. 3: ein Blockschaltbild eines Ausführungsbeispiels des in Fig. 1 dargestellten Netzwerkknoten enthaltenen Senders;
- Fig. 4A, 4B: Diagramme zur Erläuterung der Datenstruktur eines bei dem erfindungsgemäßen Verfahren übertragenen Datenpaketes;
- Fig. 5A, 5B: Signaldiagramme zur Erläuterung der bei den erfindungsgemäßen Verfahren vorgesehenen Betriebsmodi,
- Fig. 6: ein Diagramm zur Verdeutlichung einer durch das erfindungsgemäße Verfahren hervorgerufene Verbesserung der Datenpaketverlustrate;
- Fig. 7: ein weiteres Signaldiagramm zur Darstellung einer weiter reduzierten Datenpaketverlustrate bei einer Ausführungsform mit Vorzeichenwiedergewinnung.

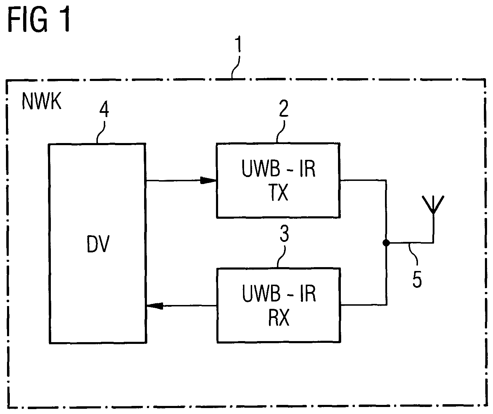

Bei dem erfindungsgemäßen drahtlosen Steuernetzwerk werden Datenpakete DP zwischen Netzwerkknoten 1 übertragen. Wie man aus Fig. 1 erkennen kann, besteht ein Netzwerkknoten 1 des Steuernetzwerkes bei dem dargestellten Ausführungsbeispiel aus einer Sendeeinrichtung 2 und einer Empfangseinrichtung 3, die jeweils an eine Datenverarbeitungseinrichtung 4, beispielsweise eine CPU beziehungsweise Mikroprozessor angeschlossen sind. Weiterhin sind die Sendeeinrichtung 2 und die Empfangseinrichtung 3 an eine Sende- und Empfangsantenne 5 angeschlossen. Über die Sende- und Empfangsantenne 5 kommuniziert der Netzwerkknoten 1 über eine drahtlose Schnittstelle beziehungsweise Funkschnittstelle mit weiteren Netzwerkknoten des drahtlosen Steuernetzwerkes.

Bei einer möglichen Ausführungsform weisen die Sendeeinrichtung 2 und die Empfangseinrichtung 3 jeweils separate Antennen auf, das heißt, die Sendeeinrichtung 2 ist an eine Sendeantenne angeschlossen und die Empfangseinrichtung 3 ist an eine Empfangsantenne angeschlossen. Der Netzwerkknoten 1 kann weitere Einrichtungen beziehungsweise Schaltungsteile enthalten, insbesondere Aktoren, Sensoren und eine eigene Stromversorgung. Über die Funkschnittstelle tauscht der Netzwerkknoten 1 Datenpakete DP mit anderen Netzwerkknoten zur Kommunikation aus. Diese Datenpakete DP weisen zur Synchronisation jeweils eine Präambel PRE auf, die aus einer vorbestimmten Anzahl von Präambelsymbolen S besteht.

In einem ersten Betriebsmodus wird jedes Präambel-Subsymbol C eines Präambelsymbols S der Präambel PRE durch die Phasenlage eines übertragenen Einzelsignalimpulses kodiert. In einem zweiten Betriebsmodus wird zur Erhöhung einer Signalerkennungsleistung der in dem Datenpaket DP übertragenen Präambel PRE anstatt eines einzelnen Signalimpulses SIF eine Signalimpulsfolge zur Kodierung des jeweiligen Präambel-Subsymbols C übertragen, wobei zur Bildung der Signalimpulsfolge SIF der Einzelsignalimpuls, welcher in dem ersten Betriebsmodus verwendet wird, mehrfach wiederholt wird.

Im zweiten Betriebsmodus wird die Signalerkennungsleistung der in dem Datenpaket DP übertragenen Präambel PRE gegenüber dem ersten Betriebsmodus erhöht, sodass die Empfangseinrichtung 3 des Netzwerkknotens 1 die Präambel PRE des empfangenen Datenpakets DP einfacher erkennen kann. Dadurch wird die Datenpaketverlustrate DPVR signifikant abgesenkt. In einer möglichen Ausführungsform ist der Netzwerkknoten 1, wie in Fig. 1 dargestellt ist, zwischen den beiden Betriebsmodi umschaltbar. Alternativ kann der Netzwerkknoten 1 für einen bestimmten Betriebsmodus, insbesondere den zweiten Betriebsmodus, vorkonfiguriert sein.

Sowohl in dem ersten als auch in dem zweiten Betriebsmodus wird der Einzelsignalimpuls beziehungsweise die Signalimpulsfolge SIF jeweils von einer Signalpause SP gefolgt, die zur Vermeidung einer Intersymbolinterferenz ISI zwischen den Präambel-Subsymbolen C vorgesehen ist. Dabei ist jedes Präambelsymbol S vorzugsweise durch eine vorbestimmte Anzahl von Präambel-Subsymbolen C ternär kodiert. Bei der ternären Kodierung weisen der Einzelsignalimpuls beziehungsweise die Signalimpulse der Signalimpulsfolge SIF jeweils ein Vorzeichen auf. Das Präambel-Subsymbol C weist in dem ersten Betriebsmodus einen Einzelsignalimpuls mit einer vorbestimmten Impulszeitdauer auf. Diese Impulszeitdauer beträgt beispielsweise 2 nsec. Dabei wird in dem ersten Betriebsmodus der Einzelsignalimpuls von einer Signalpause SP gefolgt, deren Zeitdauer bei einer möglichen Ausführungsform um einen ersten Spreizfaktor L1 länger ist als die Impulszeitdauer des Einzelsignalimpulses.

Während in einem ersten Betriebsmodus jedes Präambel-Subsymbol C eines Präambelsymbols S der Präambel PRE durch die Phasenlage eines übertragenen Einzelsignalimpulses kodiert ist, wird in dem zweiten Betriebsmodus zur Erhöhung einer Signalerkennungsleistung der in dem Datenpaket DP übertragenen Präambel PRE anstatt eines Einzelsignalimpulses einer Signalimpulsfolge SIF zur Kodierung des jeweiligen Präambel-Subsymbols C übertragen. Dabei weist jedes Präambel-Subsymbol C in dem zweiten Betriebsmodus eine aus einer vorbestimmten Anzahl N aufeinander folgenden Einzelsignalimpulsen gleicher Phasenlage bestehende Signalimpulsfolge SIF auf. Jeder Einzelsignalimpuls der Signalimpulsfolge SIF besitzt eine vorbestimmte Impulszeitdauer. Die Signalimpulsfolge wird von einer Signalpause SP gefolgt. Diese Signalpause SP weist bei einer möglichen Ausführungsform eine Zeitdauer auf, die um einen zweiten Spreizfaktor L2 länger ist als die Zeitdauer der Signalimpulsfolge SIF.

Bei einer alternativen Ausführungsform weist die Signalpause SP eine Zeitdauer auf, welche der Zeitdauer eines Präambel-Subsymbols C in dem ersten Betriebsmodus abzüglich der Zeitdauer der Signalimpulsfolge SIF entspricht. Diese Ausführungsform hat den Vorteil, dass die Präambel-Subsymbollänge insgesamt in beiden Betriebsmodi gleich bleibt, so dass sich im Vergleich zu der ersten Ausführungsform kürzere Latenzzeiten ergeben. Demgegenüber weist die erste Variante beziehungsweise Ausführungsform, bei welcher die Zeitdauer der Signalpause um einen zweiten Spreizfaktor L2 länger ist als die Zeitdauer der Signalimpulsfolge eine höhere Resistenz gegenüber einer Multipfadsignalausbreitung der Signale auf.

Bei einer möglichen Ausführungsform ist in dem ersten Betriebsmodus des in Fig. 1 dargestellten Netzwerkknotens jedes Präambel-Subsymbol C eines Präambelsymbols S der Präambel PRE standardkonform entsprechend dem Standard IEEE 802.15.4a durch die Phasenlage eines übertragenen Einzelsignalimpulses kodiert. Der in Fig. 1 dargestellte Netzwerkknoten 1 ist somit standardkonform und wird durch den zweiten Betriebsmodus erweitert. Die in den zweiten Betriebsmodus übertragene Signalimpulsfolge SIF besteht aus Signalimpulsen, deren Pulsform bei einer möglichen Ausführungsform der Pulsform des in dem ersten Betriebsmodus übertragenen Impulses beziehungsweise Einzelsignalimpulses entspricht. Dabei weisen die Signalimpulse der Signalimpulsfolge SIF jeweils eine Pulsform auf, deren Phasenlage sich eindeutig aus der Polarität einer spektralen Impulsantwort ergibt.

Bei einer möglichen Ausführungsform ist die Pulsform eine Gauss-Pulsform. Alternativ kann es sich bei der Pulsform auch um eine Gauss-Doublet-Pulsform oder eine Root-Raised Cosine Pulsform handeln. Die von dem Netzwerkknoten 1, wie er in Fig. 1 dargestellt ist, ausgetauschten Datenpakete DP weisen jeweils eine Präambel PRE zur Synchronisation auf. Dabei umfasst die Präambel des Datenpaketes DP vorzugsweise einen Synchronisationsheader SYNC mit 2ⁿ¹ Präambelsymbolen und einen Start Frame Delimiter SFD mit 2ⁿ² Präambelsymbolen, wobei n1, n2 natürliche Zahlen sind.

Bei einer möglichen Ausführungsform des erfindungsgemäßen Netzwerkknotens 1 enthält die Empfangseinrichtung 3 Korrelationseinrichtungen.

Bei einer möglichen Ausführungsform wird anhand des empfangenen Synchronisationsheaders SYNC der Präambel PRE des Datenpaketes DP mittels einer SYNC-Korrelationseinrichtung innerhalb der Empfangseinrichtung 3 des Netzwerkknotens 1 ein erster Korrelationswert berechnet, in dessen Abhängigkeit ein Empfangsverstärker des Netzwerkknotens 1 eingestellt wird.

Bei einer möglichen Ausführungsform weist die Empfangseinrichtung 3 des Netzwerkknotens 1 eine weitere sogenannte SFD-Korrelationseinrichtung auf. Anhand des Start Frame Delimiters SFD der Präambel PRE wird mittels dieser SFD-Korrelationseinrichtung der Empfangseinrichtung 3 ein zweiter Korrelationswert zur Detektion des Beginns von Nutzdaten innerhalb des empfangenen Datenpaketes DP berechnet.

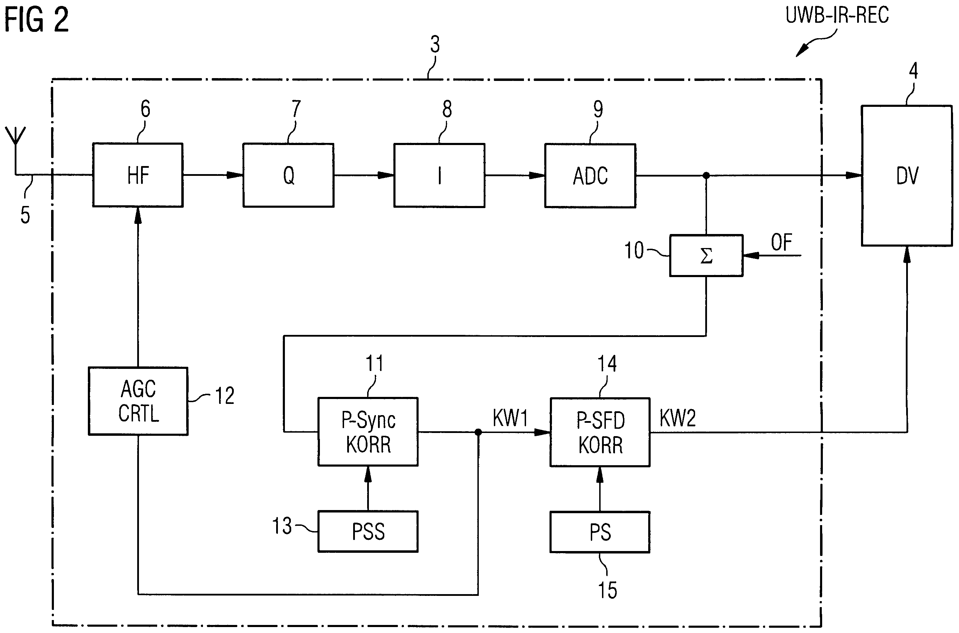

Bei der in Fig. 1 dargestellten Empfangseinrichtung 3 innerhalb des Netzwerkknotens 1 kann es sich um einen Ultra Wide Band (UWB) - Impulse Response (IR) Receiver handeln, der bei einer möglichen Ausführungsform wie in Fig. 2 dargestellt aufgebaut ist. Die Empfangseinrichtung 3 beziehungsweise der Receiver 3 weist, wie in Fig. 2 dargestellt, eine HF-Stufe 6 zum Heruntermischen des über die Antenne 5 empfangenen Signals auf. Die HF-Stufe 6 kann ein oder mehrere Signalverstärker sowie ein Bandpassfilter BPF enthalten und erzeugt ein Baseband-Signal, das an eine Signalquadrierungsstufe 7 angelegt wird. Das heruntergemischte, bandpassgefilterte Signal wird quadriert und an einem Signalintegrator 8 angelegt. Der Signalintegrator 8 integriert das Signal, mit der Symbolzeit T_{S} und legt den integrierten Wert an einen Analog-DigitalWandler 9 an. Der gebildete Digitalwert wird einer Datenverarbeitungseinrichtung beispielsweise der in Fig. 1 dargestellten Datenverarbeitungseinrichtung 4 zugeführt. Weiterhin enthält die Empfangseinrichtung 3, wie in Fig. 2 dargestellt, einen Aufsummations- beziehungsweise Aggregationseinrichtung 10, die die digitalisierten Werte für ein Präambel-Subsymbol C aufsummiert. Diese Aufsummiereinrichtung 10 wird bei einer möglichen Ausführungsform durch einen Oversampling-Faktor OF gesteuert beziehungsweise eingestellt, wobei der Over-sampling-Faktor OF aus dem Verhältnis zwischen der Dauer des Präambel-Subsymbols T_{C} und der Dauer eines Symbols T_{S} ergibt.

Die Aufsummiereinrichtung 10 ist ausgangsseitig mit einer ersten Korrelationseinrichtung 11 der Empfangseinrichtung 3 verbunden. Das von der Empfangseinrichtung 3 empfangene Datenpaket DP enthält eine Präambel PRE, die aus einem Synchronisationsheader SYNC und einem Start Frame Delimiter SFD bestehen kann. Die in Fig. 2 dargestellte Präambel-Synchronisationsheader-Korrelationseinrichtung 11 berechnet anhand des empfangenen Synchronisationsheaders SYNC der Präambel PRE einen ersten Korrelationswert KW1, der an eine Automatic Gain Control 12 abgegeben wird. Die Automatic Gain Control 12 beziehungsweise Verstärkungssteuerung 12 steuert in Abhängigkeit des ersten Korrelationswertes KW1 die Verstärkung mindestens eines in der HF-Stufe 6 enthaltenen Empfangsverstärkers zum Eintunen der Empfangseinrichtung 3 auf die empfangenen Signale. Die Korrelationseinrichtung 11 ist bei der in Fig. 2 dargestellten Ausführungsform an ein Register 13 angeschlossen, in dem sich Präambel-Subsymbole C beziehungsweise Präambelchips C befinden, beispielsweise 31 Präambel-Subsymbole. Die in dem Register gespeicherten Präambel-Subsymbole C bilden in eine gespeicherte Erkennungsschablone. Der von der Korrelationseinrichtung 11 abgegebene Korrelationswert gibt an wie ähnlich einer empfangenen Präambel PRE mit einer erwarteten Präambel ist. Der Korrelationswert kann bei einer möglichen Ausführungsform mittels eines Schwellenwertkomparators mit einem Schwellenwert beziehungsweise Treshold Value TH verglichen werden. Sobald der berechnete Korrelationswert den Schwellenwert überschreitet wird erkannt, dass die empfangene Präambel PRE der erwarteten Präambel entspricht. Bei Überschreiten des Schwellenwertes TH wird somit das Präambelsymbol erkannt.

Bei der in Fig. 2 dargestellten Ausführungsform wird mittels einer SFD-Korrelationseinrichtung 14 anhand des empfangenen Start Frame Delimiters SFD des empfangenen Datenpaketes DP ein zweiter Korrelationswert KW2 zur Selektion des Beginns von Nutzdaten innerhalb des Datenpaketes DP berechnet. Der SFD-Korrelator 14 ist an ein Register 15 angeschlossen, in dem sich beispielsweise acht vorgegebene Präambelsymbole S des erwarteten Start Frame Delimiters SFD befinden. Wird der Start Frame Delimiter SFD erkannt, wird die Datenverarbeitungseinrichtung 4, wie in Fig. 2 dargestellt, zur Datenverarbeitung der von dem ADC 9 abgegebenen Nutzdaten aktiviert.

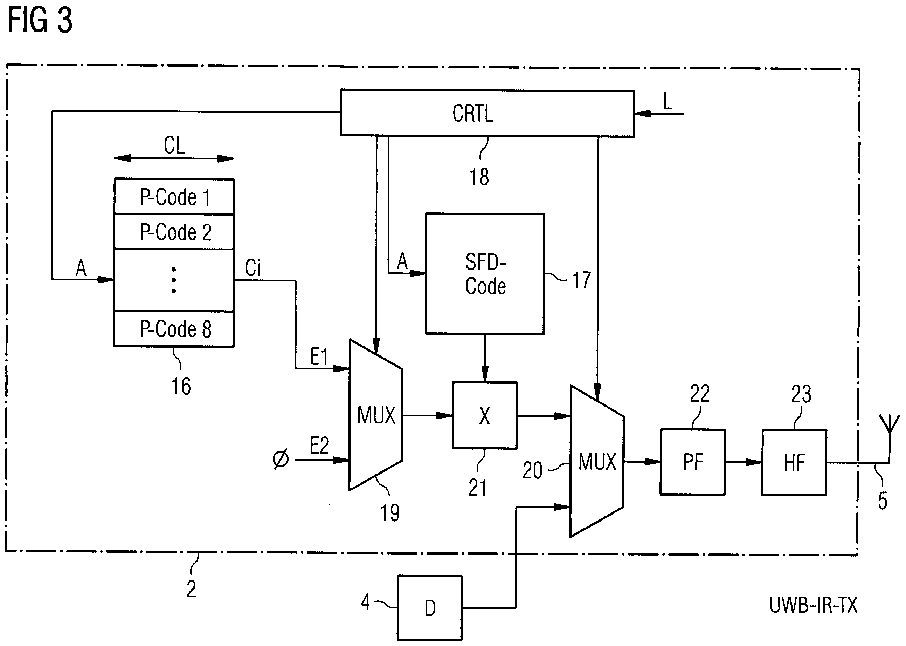

Fig. 3 zeigt schematisch ein Blockdiagramm zur Darstellung eines Ausführungsbeispiels der Sendeeinrichtung 2, die in dem in Fig. 1 dargestellten Netzwerkknoten 1 eingesetzt wird. Bei dem in Fig. 3 dargestellten Ausführungsbeispiel handelt es sich bei der Sendeeinrichtung 2 um einen Ultra Wide Band (UWB) - Impulse Response (IR) Sender. Das in Fig. 3 dargestellte Schaltungsteil generiert die Präambel PRE eines Datenpaketes DP, welches bei dem erfindungsgemäßen Verfahren eingesetzt wird. In einem Datenspeicher 16, bei dem es sich beispielsweise um einen RAM-Speicher handelt, befinden sich beispielsweise acht Präambelcodes P-Code 1 bis P-Code 8, die eine jeweils vorbestimmte Anzahl von Präambel-Subsymbolen C umfassen, beispielsweise 31 Präambel-Subsymbole C. Die Anzahl der Präambel-Subsymbole C innerhalb eines Präambelcodes bildet die Code-Länge CL, wie in Fig. 3 dargestellt. In einem zweiten Datenspeicher 17 befinden sich die Präambelsymbole eines Standard SFD (Start Frame Delimiter) Codes. Die beiden Datenspeicher 16, 17, bei denen es sich beispielsweise um RAM-Speicher handelt, werden durch eine Steuerlogik 18 adressiert. Die Steuerlogik 18 steuert ferner über Steuerleitungen zwei Multiplexer 19, 20, wie in Fig. 3 dargestellt. Die Steuerlogik 18 kann mehrere Zähleinrichtungen beziehungsweise Counter beinhalten.

Ein Zähler der Steuerlogik 18 zählt bei einer möglichen Ausführungsform von einem Wert null hoch bis zu einem Spreizfaktor L1, wobei bei einem Zählwert null der erste Eingang E1 des Multiplexers 19 durchgeschaltet wird und bei den übrigen Zählwerten dieses Zählers der zweite Eingang E2 des Multiplexers 19 durchgeschaltet wird. So wird dem Präambel-Subsymbol cᵢ des gerade in dem Speicher 16 adressierten Präambelcodes eine Anzahl von Nullen beziehungsweise Nullwerten angehängt, wobei die Anzahl der angehängten Nullwerte, die eine Signalpause SP bilden, dem Spreizfaktor L-1 entspricht. Der Spreizfaktor L ist bei einer möglichen Ausführungsform der Steuerlogik 18 einstellbar. Beträgt der Spreizfaktor L beispielsweise 16, werden an jedes Präambel-Subsymbol C, das aus dem Speicher 16 ausgelesen wird, fünfzehn Nullwerte angehängt, bevor das nächste Präambel-Subsymbol C durchgeschaltet wird. Die in dem Multiplexer 19 gebildete Folge aus Präambel-Subsymbolen C, die jeweils eine dem Spreizfaktor L entsprechende Anzahl von Nullwerten aufweisen werden, wird wie in Fig. 3 dargestellt, einem Mischer beziehungsweise Multiplizierer 21 zugeführt. Dieser multipliziert ein aus dem Speicher 17 ausgelesenes Präambelsymbol des Standard SFD-Codes mit der von dem Multiplexer 19 abgegebenen Folge. Sobald eine Präambel PRE fertig gestellt ist, schaltet die Steuerlogik 18 den Multiplexer 20 auf den Dateneingang um, der mit einer Datenverarbeitungseinrichtung, beispielsweise der in Fig. 1 dargestellten Datenverarbeitungseinrichtung 4, verbunden ist. Ausgangsseitig ist der Multiplexer 20 mit einem Pulsformer 22 verbunden, der seinerseits ausgangsseitig an eine HF-Stufe 23 angeschlossen ist.

Bei einer möglichen Ausführungsform verfügt die Steuerlogik 18 über einen integrierten Taktgenerator zur Taktung der Zähler. In einer möglichen Ausführungsform generiert der Taktgenerator dabei ein Taktsignal CLK mit einer Tonfrequenz von 500 MHz, wobei dieses Taktsignal an dem Zähler zur Ansteuerung des Multiplexers 19 angelegt wird. Alternativ kann das Taktsignal CLK der Steuerlogik 18 auch von außen zugeführt werden.

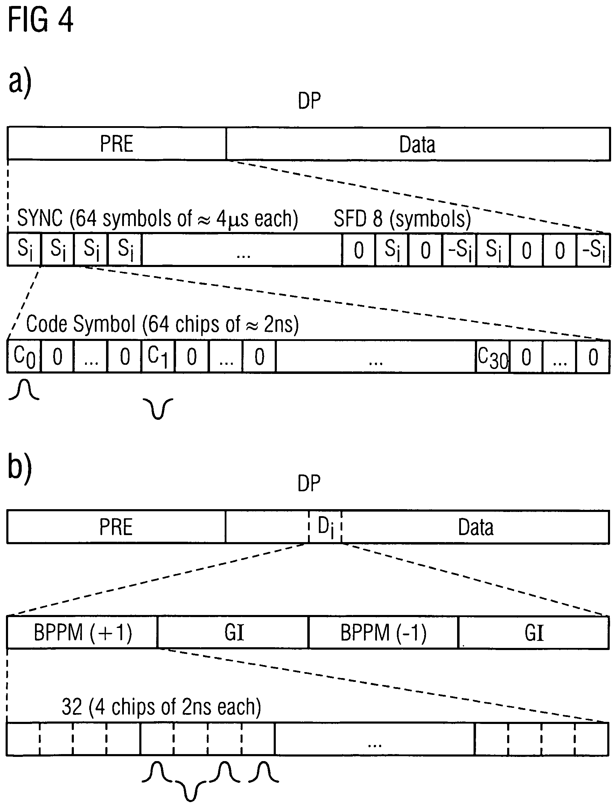

Fig. 4A dient zur Verdeutlichung der Datenstruktur der Präambel PRE eines bei dem erfindungsgemäßen Verfahren und erfindungsgemäßen Vorrichtung eingesetzten Datenpaketes DP. Die Präambel PRE besteht aus einem Synchronisationsheader SYNC mit einem Start Frame Delimiter SFD. Der Synchronisationsheader SYNC besteht vorzugsweise aus 2ⁿ¹ Präambelsymbolen S. Bei dem in Fig. 4A dargestellten Ausführungsbeispiel umfasst der Synchronisationsheader SYNC beispielsweise 64 Präambelsymbole S. (n1=6). Weiterhin enthält die Präambel PRE einen Start Frame Delimiter SFD mit 2ⁿ² Präambelsymbolen, beispielsweise acht Präambelsymbolen, wie in Fig. 4A dargestellt (n2=3). Jedes Präambelsymbol S besteht seinerseits aus Präambel-Subsymbolen C beziehungsweise Codechips Cᵢ. In dem ersten Betriebsmodus des erfindungsgemäßen Verfahrens wird jedes Präambel-Subsymbol C eines Präambelsymbols S der Präambel PRE durch die Phasenlage eines übertragenen Einzelsignalimpulses kodiert. Dies bedeutet, dass jeder Codechip Cᵢ einen Einzelsignalimpuls aufweist, der von einer Folge von Nullwerten gefolgt wird, die eine Signalpause SP bilden. Die Signalpause SP dient dazu, eine Intersymbolinterferenz ISI zwischen den Präambel-Subsymbolen beziehungsweise Codechips Cᵢ zu vermeiden. Ein Signalimpuls weist vorzugsweise ein positives, ein negatives oder ein neutrales Vorzeichen auf. Das Präambelsymbol S wird vorzugsweise durch eine vorbestimmte Anzahl von Präambel-Subsymbolen C ternär kodiert. Vorzugsweise wird ein jedes Präambel-Subsymbol durch 31 Präambel-Symbole ternär kodiert, wie in Fig. 4A dargestellt. Zu Beginn jedes Präambel-Subsymbols beziehungsweise Codechips Cᵢ ist in dem ersten Betriebsmodus ein Einzelsignalimpuls mit einer bestimmten vorgegebenen Impulszeitdauer von beispielsweise 2 nsec vorgesehen. Der Einzelsignalimpuls wird von einer Anzahl von Nullwerten gefolgt, wobei die Anzahl von Nullwerten durch den Spreiz- beziehungsweise Spreading-Faktor L minus 1 gegeben ist. Bei einem Spreading-Faktor L=16 wird somit ein Einzelsignalimpuls von 15 Nullwerten und bei einem Spreading-Faktor von 64 wird ein Einzelsignalimpuls von 63 Nullwerten gefolgt. Je höher die Anzahl der Nullwerte ist und je länger somit die folgende Signalpause SP ist, desto resistenter ist die Präambel PRE gegenüber Störungen durch Multipfadsignalausbreitung. Es erhöht sich allerdings aufgrund der größeren Länge der Präambel-Subsymbole die Latenzzeit. In einem ersten Betriebsmodus des erfindungsgemäßen Verfahrens ist jedes Präambel-Subsymbol beziehungsweise Codechip Cᵢ durch die Phasenlage eines übertragenen Einzelsignalimpulses kodiert, wobei der Einzelsignalimpuls eine bestimmte Pulsform und eine vorbestimmte Impulszeitdauer aufweist. Bei einem Einzelsignalimpuls kann es sich um einen Impuls mit einer Gauss-Pulsform, einer Gauss-Doublet-Pulsform oder einer Root-Raised Cosine Pulsform handeln. Da die Pulsdauer des Einzelsignalimpulses beispielsweise unter 2 nsec liegt, weist der Einzelsignalimpuls bei der Übertragung nur eine geringe Energiemenge auf, die insbesondere bei einer verrauschten Umgebung seitens der Empfangseinrichtung nur schwer zu erkennen ist.

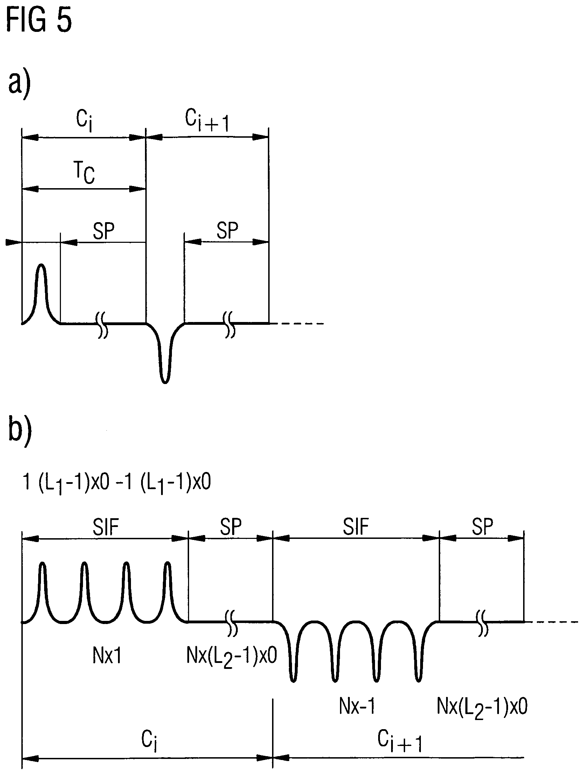

Fig. 5A ist ein Signaldiagramm zur Verdeutlichung der Signalübertragung in den ersten Betriebsmodus des erfindungsgemäßen Verfahrens. In diesem Betriebsmodus wird zunächst ein Einzelsignalimpuls übertragen, der von einer bestimmten Anzahl von Nullwerten gefolgt wird. Die Anzahl der Nullwerte wird durch den Spreading- beziehungsweise Spreizfaktor L bestimmt. Beispielsweise werden bei einem Spreizfaktor von L = 16 fünfzehn Nullwerte übertragen. Bei einer Impulsdauer von 2 nsec beträgt die Dauer T_{C} des Präambel-Subsymbols C 16 x 2 nsec = 32 nsec. Bei einem Spreizfaktor von 64 beträgt die Dauer des Präambel-Subsymbols T_{C} beispielsweise 128 nsec. Ist z.B. die Codelänge CL beziehungsweise die Anzahl der Präambel-Subsymbole C innerhalb eines Präambelsymbols S CL = 31 beträgt die Dauer eines Symbols innerhalb der Präambel PRE etwa 4 µsec. Bei dem in Fig. 5A dargestellten Beispiel wird zunächst ein Einzelsignalimpuls mit einem positiven Vorzeichen übertragen, gefolgt von einem Einzelsignalimpuls, der ein negatives Vorzeichen besitzt.

Bei einer möglichen Ausführungsform des erfindungsgemäßen Verfahrens wird jedes Präambel-Subsymbol C ternär kodiert, wobei jeder Einzelsignalimpuls jeweils ein Vorzeichen VZ aufweist. Auch andere Kodierungen, beispielsweise eine binäre Kodierung sind ebenfalls möglich.

Fig. 5B zeigt ein Signaldiagramm zur Erläuterung des zweiten Betriebsmodus des erfindungsgemäßen Verfahrens. In dem zweiten Betriebsmodus wird zur Erhöhung einer Signalerkennungsleistung der in dem Datenpaket DP übertragenen Präambel PRE anstatt eines Einzelsignalimpulses eine Signalimpulsfolge SIF zur Kodierung des Präambelsymbols S übertragen. Dabei wird der in dem ersten Betriebsmodus übertragene Einzelsignalimpuls mehrfach wiederholt. In dem zweiten Betriebsmodus weist jedes Präambel-Subsymbol C eine vorbestimmte Anzahl N von aufeinander folgenden Einzelsignalimpulsen gleicher Phasenlage auf. In dem in Fig. 5B dargestellten Beispiel umfasst die Signalimpulsfolge SIF vier aufeinander folgende Einzelsignalimpulse (N = 4). Die aus vier Impulsen bestehende Signalimpulsfolge SIF wird von einer Signalpause SP gefolgt. Bei einer möglichen Variante ist die Zeitdauer der Signalpause SP um einen zweiten Spreizfaktor L2 länger als die Zeitdauer der Signalimpulsfolge. Der Spreizfaktor L2 kann mit dem in dem ersten Betriebsmodus verwendeten Spreizfaktor L1 identisch sein. Ist der zweite Spreizfaktor L2 beispielsweise 16 wie in dem in Fig. 5b dargestellten Ausführungsbeispiel, so wird die Signalimpulsfolge SIF von einer Signalpause SP gefolgt, die 4 x 15 = 60 Nullwerte umfasst. Es folgt dann die nächste Signalimpulsfolge SIF des nächsten Codechips Cᵢₜ₁ beziehungsweise Präambel-Subsymbols, wie bei dem in Fig. 5B dargestellten Beispiel, bei dem die Signalimpulsfolge SIF aus vier aufeinander folgenden Signalimpulsen mit negativen Vorzeichen besteht.

Die Dauer der Signalpause SP kann bei einem alternativen Ausführungsbeispiel der Zeitdauer eines Präambel-Subsymbols Cᵢ beziehungsweise Codechips in dem ersten Betriebsmodus abzüglich der Zeitdauer der Signalimpulsfolge SIF entsprechen. Diese Ausführungsform bietet den Vorteil, dass die Dauer des Codechips Cᵢ beziehungsweise der Präambel-Subsymbole in beiden Betriebsmodi gleich lang ist. Insofern ist die Latenzzeit aufgrund der geringeren Präambel-Subsymbollänge im Vergleich zu der anderen Alternative besser. Die Resistenz gegenüber Störungen aufgrund von Multipfadsignalausbreitungen ist allerdings bei der in Fig. 5B dargestellten Ausführungsform aufgrund der Länge der Signalpause SP und der damit verbundenen geringeren Intersymbolinterferenz ISI zwischen den Präambel-Subsymbolen C höher.

Bei dem in Fig. 5B dargestellten zweiten Betriebsmodus werden in der Präambel PRE somit nicht einzelne Signalimpulse, sondern Signalimpulsfolgen SIF übertragen. Diese Signalimpulsfolgen SIF werden von einer längeren Signalpause SP gefolgt, die bei dem in Fig. 5B dargestellten Ausführungsbeispiel entsprechend der Anzahl der Impulse der Signalimpulsfolge SIF verlängert wird. Bei der in Fig. 5b dargestellten Ausführungsvariante verändert sich die mittlere abgestrahlte Energie nicht und die Energiebilanz bleibt unverändert.

Bei dem erfindungsgemäße Verfahren wird in dem zweiten Betriebsmodus das Präambelsymbol S der Präambel PRE bei der in Fig. 5B dargestellten Variante verlängert, wobei die Erkennungsleistung derart verbessert beziehungsweise erhöht wird, dass Wiederholungen von Datenpaketen DP vermieden werden können. Vorzugsweise ist die Modifikation des Präambelsymbols S Zeit- und Energieneutral, wobei jedoch erfreulicherweise die Datenpaketverlustrate DPVR immens gesenkt wird.

Bei dem erfindungsgemäßen Verfahren wird vorzugsweise die Pulsform derart gewählt, dass deren Phasenlage sich eindeutig aus der Polarität der spektralen Impulsantwort ergibt. Beispielsweise wird als Pulsform eine Gauss-Pulsform, eine Gauss-Doublet-Pulsform oder eine Root-Raised Cosine Pulsform gewählt.

Bei einer möglichen Ausführungsform wird in der Empfangseinrichtung 3 das Vorzeichen VZ des empfangenen Symbols vor dem Quadrieren ermittelt, wobei dieses ermittelte Vorzeichen VZ für die Präambelerkennung verwendet wird. Bei dieser Ausführungsvariante wird eine noch bessere beziehungsweise noch höhere Erkennungsleistung zum Erkennen des Präambelsymbols S bereitgestellt. Bei der vorliegenden Ausführungsform wird hierzu bei der in Fig. 2 dargestellten Empfangseinrichtung 3 nach der HF-Stufe 6 eine Vorzeichenerkennungsschaltung vorgesehen, die das Vorzeichen VZ des Signalimpulses ermittelt und das ermittelte Vorzeichen hinter der ADC-Wanderstufe 9 als Bit bzw. Vorzeichenbit wieder eingefügt.

Fig. 4B zeigt den Datenteil des bei dem erfindungsgemäßen Verfahren verwendeten Datenpaketes DP. Das Datenteil kann mit einer Burst Position Modulation (BPM) moduliert sein. Dabei können sehr kurze, hoch energetische Impulsfolgen, gefolgt von langen Pausen, versendet werden. Die übertragene Information wird durch die Position des Puls-Bursts innerhalb des Zeitraums für ein Symbol, das heißt für die vordere oder hintere Hälfte, kodiert. Dabei wird stets nur das vordere Viertel der Hälfte benutzt, das heißt, das Viertel 1 und Viertel 3 jedes Symbolzeitraums. Das zweite Viertel jeder Hälfte wird als Sicherheitsabstand beziehungsweise Guardintervall GI vorgesehen, um eine Intersymbolinterferenz zu reduzieren. Das Symbolintervall hat demnach die in Fig. 4B dargestellte Datenstruktur. Das Symbolintervall besteht aus zwei Hälften mit der Länge T_{BPPM}, in denen jeweils die zweite Hälfte als Gradintervall GI freigehalten wird. Die beiden verbleibenden Viertel sind ihrerseits wieder in mehrere On Hopping Positions der Länge t_{burst} unterteilt. Für jedes Datenbit wird ein zweites Bit, das die Prüfsumme des Systematic Convolution Decoders enthält, in die Phasenlage des einzelnen Pulses des Pulsbursts kodiert.

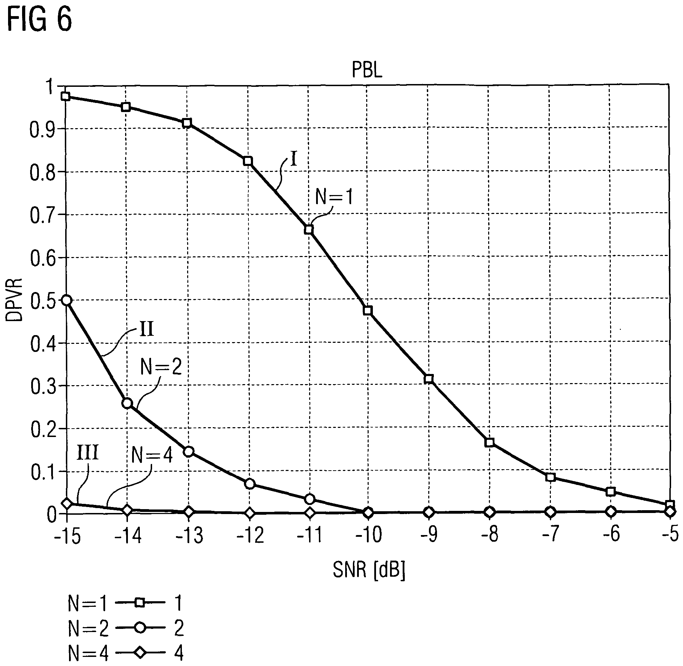

Fig. 6 zeigt ein Diagramm zur Verdeutlichung der Absenkung der Datenpaketverlustrate DPVR bei dem erfindungsgemäßen Verfahren zur Übertragung von Datenpaketen DP zwischen Netzwerkknoten 1 eines Steuernetzwerkes. Ein steigendes Signalrauschverhältnis SNR vermindert die Datenpaketverlustrate DVPR wie in Fig. 6 ersichtlich. Weiterhin sinkt die Datenpaketverlustrate DVPR mit steigender Präambel-Burstlänge PBL.

Die Kurve I zeigt die Datenpaketverlustrate DPVR für ein Präambel-Subsymbol C, das durch die Phasenlage eines einzeln übertragenen Einzelsignalimpulses (N = 1) kodiert wird. Demnach zeigt die Kurve I das Verhalten in dem ersten Betriebsmodus des erfindungsgemäßen Verfahrens zum drahtlosen Übertragen von Datenpaketen DP zwischen Netzwerkknoten 1 eines Steuernetzwerkes.

Die Kurve II zeigt das Verhalten einer Datenpaketverlustrate DPVR in dem zweiten Betriebsmodus bei einer Anzahl N = 2 aufeinander folgenden Signalpulse der Signalimpulsfolge SIF. Beträgt die Anzahl der Signalimpulse innerhalb der Signalimpulsfolge SIF im zweiten Betriebsmodus N = 4, ergibt sich das Verhalten gemäß der Kurve III in Fig. 6.

Wie man aus Fig. 6 erkennen kann ist bereits bei vier aufeinander folgenden Signalimpulsen (N = 4) die Datenpaketverlustrate DPVR fast auf null abgesenkt, was eine nahezu 100-prozentige erfolgreiche Synchronisation selbst bei einem Signalrauschverhältnis von SNR = -15 Dezibel erlaubt.

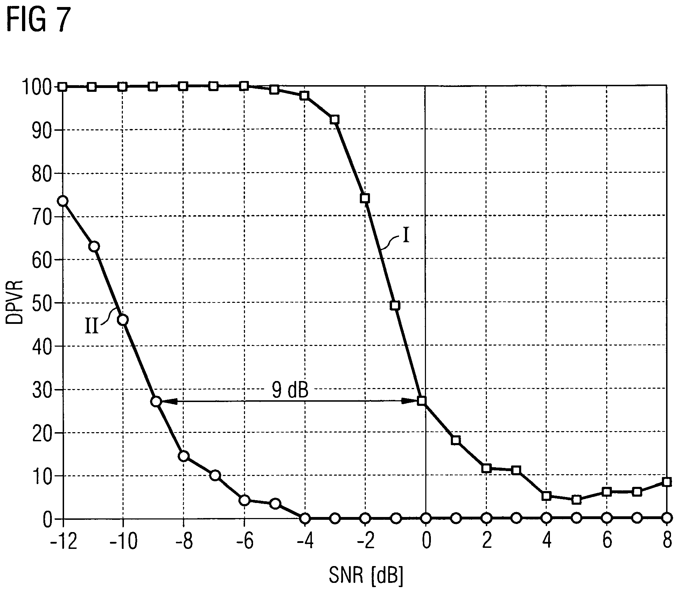

Erfolgt zusätzlich eine Vorzeichenerkennung, ergibt sich der in Fig. 7 dargestellte Verlauf der Datenpaketverlustrate DPVR in Abhängigkeit des Signalrauschverhältnisses SNR. Wie man aus Fig. 7 erkennen kann, erreicht man durch die Vorzeichenerkennung des Präambelcodes die gleiche Datenpaketverlustrate DPVR selbst bei einem um 9 Dezibel schlechteren Signalrauschverhältnis SNR im Vergleich zu einem Empfänger ohne Vorzeichenerkennung. Die Kurve I zeigt in Fig. 7 den Fall ohne Vorzeichenerkennung und die Kurve II zeigt den Verlauf bei einer Empfangeinrichtung mit Vorzeichenerkennung.

## Patentansprüche

1. Verfahren zum drahtlosen Übertragen von Datenpaketen (DP) eines Netzwerkknotens (1) in einem Steuernetzwerk, wobei die Datenpakete (DP) zur Synchronisation jeweils eine Präambel (PPE) aufweisen, die aus einer vorbestimmten Anzahl von Präambelsymbolen (S) besteht;
wobei in einem ersten Betriebsmodus jeweils ein Präambel-Subsymbol (C) des Präambelsymbols (S) der Präambel (PPE) durch die Phasenlage eines übertragenen Einzelsignalimpulses kodiert wird;
**dadurch gekennzeichnet, dass**
in einem zweiten Betriebsmodus zur Erhöhung einer Signalerkennungsleistung der in dem Datenpaket (DP) übertragenen Präambel (PPE) anstatt eines Einzelsignalimpulses eine aus einer vorbestimmten Anzahl (N) aufeinanderfolgenden Einzelsignalimpulsen gleicher Phasenlage bestehende Signalimpulsfolge (SIF) zur Kodierung des Präambel-Subsymbols (C) übertragen wird, bei welcher der Einzelsignalimpuls mehrfach wiederholt wird und
der Netzwerkknoten (1) zwischen den beiden Betriebsmodi umgeschaltet wird.

2. Verfahren zum drahtlosen Übertragen von Datenpaketen (DP) eines Netzwerkknotens (1) in einem Steuernetzwerk, wobei die Datenpakete (DP) zur Synchronisation jeweils eine Präambel (PPE) aufweisen, die aus einer vorbestimmten Anzahl von Präambelsymbolen (S) besteht;
wobei in einem ersten Betriebsmodus jeweils ein Präambel-Subsymbol (C) des Präambelsymbols (S) der Präambel (PPE) durch die Phasenlage eines übertragenen Einzelsignalimpulses kodiert wird;
**dadurch gekennzeichnet, dass**
in einem zweiten Betriebsmodus zur Erhöhung einer Signalerkennungsleistung der in dem Datenpaket (DP) übertragenen Präambel (PPE) anstatt eines Einzelsignalimpulses eine aus einer vorbestimmten Anzahl (N) aufeinanderfolgenden Einzelsignalimpulsen gleicher Phasenlage bestehende Signalimpulsfolge (SIF) zur Kodierung des Präambel-Subsymbols (C) übertragen wird, bei welcher der Einzelsignalimpuls mehrfach wiederholt wird und
der Netzwerkknoten (1) für einen bestimmten Betriebsmodus der beiden Betriebsmodi, insbesondere den zweiten Betriebsmodus, vorkonfiguriert wird.

3. Verfahren nach Anspruch 1 oder 2,
wobei der Einzelsignalimpuls oder die Signalimpulsfolge (SIF) jeweils von einer Signalpause (SP) gefolgt wird, die zur Vermeidung einer Intersymbolinterferenz zwischen den Präambel-Subsymbolen (C) vorgesehen ist.

4. Verfahren nach Anspruch 1, 2 oder 3,
wobei jedes Präambelsymbol (S) durch eine vorbestimmte Anzahl von Präambel-Subsymbolen (C) ternär kodiert ist, wobei der Einzelsignalimpuls und die Signalimpulse der Signalimpulsfolge (SIF) jeweils ein Vorzeichen aufweisen.

5. Verfahren nach Anspruch 4,
wobei die Vorzeichen der Signalimpulse eines empfangenen Datenpaketes (DP) zur Senkung der Datenpaketverlustrate erkannt werden.

6. Verfahren nach einem der vorangehenden Ansprüche 1 bis 5,
wobei jedes Präambel-Subsymbol (C) in dem ersten Betriebsmodus einen Einzelsignalimpuls mit vorbestimmter Impulszeitdauer aufweist;
wobei der Einzelsignalimpuls von einer Signalpause (SP) gefolgt wird, deren Zeitdauer um einen ersten Spreizfaktor (L1) länger ist als die Impulszeitdauer des Einzelsignalimpulses.

7. Verfahren nach einem der vorangehenden Ansprüche 1 bis 6,
wobei jedes Präambel-Subsymbol (C) in dem zweiten Betriebsmodus die aus der vorbestimmten Anzahl (N) von aufeinander folgenden Einzelsignalimpulsen gleicher Phasenlage bestehende Signalimpulsfolge (SIF) aufweist; wobei jeder Einzelsignalimpuls der Signalimpulsfolge (SIF) eine vorbestimmte Impulszeitdauer aufweist; wobei die Signalimpulsfolge (SIF) von einer Signalpause (SP) gefolgt wird, deren Zeitdauer um einen zweiten Spreizfaktor (L2) länger ist als die Zeitdauer der Signalimpulsfolge (SIF) oder deren Zeitdauer, der Zeitdauer eines Präambel-Subsymbols (C) in dem ersten Betriebsmodus abzüglich der Zeitdauer der Signalimpulsfolge (SIF) entspricht.

8. Verfahren nach einem der vorangehenden Ansprüche 1 bis 7,
wobei in dem ersten Betriebsmodus jedes Präambel-Subsymbol (C) eines Präambelsymbols (S) der Präambel (PPE) standardkonform entsprechend dem Standard IEEE 802.15.4a durch die Phasenlage eines übertragenen Einzelsignalimpulses kodiert wird.

9. Verfahren nach einem der vorangehenden Ansprüche 1 bis 8,
wobei der in dem ersten Betriebsmodus übertragene Einzelsignalimpuls und die in dem zweiten Betriebsmodus übertragenen Signalimpulse der Signalimpulsfolge (SIF) eine Pulsform aufweisen, deren Phasenlage sich eindeutig aus der Polarität einer spektralen Impulsantwort ergibt.

10. Verfahren nach Anspruch 9,
wobei die Pulsform eine Gauss-Pulsform, eine Gauss-Doublet-Pulsform oder eine Root-Raised Cosine Pulsform ist.

11. Verfahren nach einem der vorangehenden Ansprüche 1 bis 10,
wobei die Präambel (PPE) des Datenpaketes (DP) einen Synchronisationsheader (SYNC) mit 2ⁿ¹ Präambelsymbolen und einen Startframe Delimiter (SFD) mit 2ⁿ² Präambelsymbolen aufweist, wobei n₁, n₂ natürliche Zahlen sind.

12. Verfahren nach Anspruch 11,
wobei anhand des durch einen Netzwerkknoten (1) des Steuernetzwerkes empfangenen Synchronisationsheaders (SYNC)der Präambel (PRE) eines Datenpaketes (DP) mittels einer SYNC-Korrelationseinrichtung (11) ein erster Korrelationswert (KW1) berechnet wird, in dessen Abhängigkeit ein Empfangsverstärker innerhalb einer HF-Stufe (6) des Netzwerkknotens (1) eingestellt wird.

13. Verfahren nach Anspruch 11,
wobei anhand des durch einen Netzwerkknoten (1) des Steuernetzwerkes empfangenen Startframe Delimiters (SFD) der Präambel (PRE) eines Datenpaktes (DP) mittels einer SFD-Korrelationseinrichtung ein zweiter Korrelationswert (KW2) zur Detektion des Beginns von Nutzdaten innerhalb des Datenpaketes (DP) berechnet wird.

14. Verfahren nach einem der vorangehenden Ansprüche 1 bis 13,
wobei die Impulszeitdauer des Einzelsignalimpulses 2 nsec beträgt.

15. Verfahren nach einem der vorangehenden Ansprüche 1 bis 14,
wobei in dem zweiten Betriebsmodus die Anzahl (N) der aufeinander folgenden Einzelsignalimpulse der Signalimpulsfolge (SIF) N = 4 beträgt.

16. Vorrichtung (2, 3) zum drahtlosen Übertragen von Datenpaketen (DP) eines Netzwerkknotens (1) in einem Steuernetzwerk, mit Mitteln (6-15, 17-23) zur Steuerung der Datenpaketübertragung, die derart ausgebildet und miteinander verbunden sind, dass
die Datenpakete (DP), die jeweils eine Präambel (PPE) aufweisen, wobei die Präambel aus einer vorbestimmten Anzahl von Präambelsymbolen (S) besteht synchronisiert wird;
in einem ersten Betriebsmodus jeweils ein Präambel-Subsymbol (C) des Präambelsymbols (S) der Präambel (PPE) durch die Phasenlage eines übertragenen Einzelsignalimpulses kodiert wird;
**dadurch gekennzeichnet, dass**
die Mittel (6-15, 17-23) zur Steuerung der Datenpaketübertragung derart ausgebildet und miteinander verbunden sind, dass
in einem zweiten Betriebsmodus zur Erhöhung einer Signalerkennungsleistung der in dem Datenpaket (DP) übertragenen Präambel (PPE) anstatt eines Einzelsignalimpulses eine aus einer vorbestimmten Anzahl N aufeinanderfolgenden Einzelsignalimpulsen gleicher Phasenlage bestehende Signalimpulsfolge (SIF) zur Kodierung des Präambel-Subsymbols (C) übertragen wird, bei welcher der Einzelsignalimpuls mehrfach wiederholt wird und
der Netzwerkknoten (1) zwischen den beiden Betriebsmodi umgeschaltet wird.

17. Vorrichtung (2, 3) zum drahtlosen Übertragen von Datenpaketen (DP) eines Netzwerkknotens (1) in einem Steuernetzwerk, mit Mitteln (6-15, 17-23) zur Steuerung der Datenpaketübertragung, die derart ausgebildet und miteinander verbunden sind, dass
die Datenpakete (DP), die jeweils eine Präambel (PPE) aufweisen, wobei die Präambel aus einer vorbestimmten Anzahl von Präambelsymbolen (S) besteht synchronisiert wird;
in einem ersten Betriebsmodus jeweils ein Präambel-Subsymbol (C) des Präambelsymbols (S) der Präambel (PPE) durch die Phasenlage eines übertragenen Einzelsignalimpulses kodiert wird;
**dadurch gekennzeichnet, dass**
die Mittel (6-15, 17-23) zur Steuerung der Datenpaketübertragung derart ausgebildet und miteinander verbunden sind, dass
in einem zweiten Betriebsmodus zur Erhöhung einer Signalerkennungsleistung der in dem Datenpaket (DP) übertragenen Präambel (PPE) anstatt eines Einzelsignalimpulses eine aus einer vorbestimmten Anzahl N aufeinanderfolgenden Einzelsignalimpulsen gleicher Phasenlage bestehende Signalimpulsfolge (SIF) zur Kodierung des Präambel-Subsymbols (C) übertragen wird, bei welcher der Einzelsignalimpuls mehrfach wiederholt wird und
der Netzwerkknoten (1) für einen bestimmten Betriebsmodus der beiden Betriebsmodi, insbesondere den zweiten Betriebsmodus, vorkonfiguriert wird.

18. Netzwerkknoten (1) zum drahtlosen Übertragen von Datenpaketen (DP),
wobei die Datenpakete (DP) zur Synchronisation jeweils eine Präambel (PPE) aufweisen, die aus einer vorbestimmten Anzahl von Präambelsymbolen (S) besteht;
wobei in einem ersten Betriebsmodus jeweils ein Präambel-Subsymbol (C) des Präambelsymbols (S) der Präambel (PPE) durch die Phasenlage eines übertragenen Einzelsignalimpulses kodiert ist;
**dadurch gekennzeichnet, dass**
in einem zweiten Betriebsmodus zur Erhöhung einer Signalerkennungsleistung der in dem Datenpaket (DP) übertragenen Präambel (PPE) anstatt eines Einzelsignalimpulses eine aus einer vorbestimmten Anzahl N aufeinanderfolgenden Einzelsignalimpulsen gleicher Phasenlage bestehende Signalimpulsfolge (SIF) zur Kodierung des Präambel-Subsymbols (C) übertragbar ist, bei welcher der Einzelsignalimpuls mehrfach wiederholt wird und
der Netzwerknoten (1) zwischen den beiden Betriebsmodi umschaltbar ist.

19. Netzwerkknoten (1) zum drahtlosen Übertragen von Datenpaketen (DP),
wobei die Datenpakete (DP) zur Synchronisation jeweils eine Präambel (PPE) aufweisen, die aus einer vorbestimmten Anzahl von Präambelsymbolen (S) besteht;
wobei in einem ersten Betriebsmodus jeweils ein Präambel-Subsymbol (C) des Präambelsymbols (S) der Präambel (PPE) durch die Phasenlage eines übertragenen Einzelsignalimpulses kodiert ist;
**dadurch gekennzeichnet, dass**
in einem zweiten Betriebsmodus zur Erhöhung einer Signalerkennungsleistung der in dem Datenpaket (DP) übertragenen Präambel (PPE) anstatt eines Einzelsignalimpulses eine aus einer vorbestimmten Anzahl N aufeinanderfolgenden Einzelsignalimpulsen gleicher Phasenlage bestehende Signalimpulsfolge (SIF) zur Kodierung des Präambel-Subsymbols (C) übertragbar ist, bei welcher der Einzelsignalimpuls mehrfach wiederholt wird und
der Netzwerkknoten (1) für einen bestimmten Betriebsmodus der beiden Betriebsmodi, insbesondere den zweiten Betriebsmodus, vorkonfigurierbar ist.

20. Drahtloses Steuernetzwerk mit Netzwerkknoten (1), die Datenpakete (DP) übertragen,
wobei die Datenpakete (DP) zur Synchronisation jeweils eine Präambel (PRE) aufweisen, die aus einer vorbestimmten Anzahl von Präambelsymbolen (S) besteht;
wobei in einem ersten Betriebsmodus jeweils ein Präambel-Subsymbol (C) des Präambelsymbols (S) der Präambel (PRE) durch die Phasenlage eines übertragenen Einzelsignalimpulses kodiert ist;
**dadurch gekennzeichnet, dass**
in einem zweiten Betriebsmodus zur Erhöhung einer Signalerkennungsleistung der in dem Datenpaket (DP) übertragenen Präambel (PRE) anstatt eines einzelnen Signalimpulses eine aus einer vorbestimmten Anzahl N aufeinanderfolgenden Einzelsignalimpulsen gleicher Phasenlage bestehende Signalimpulsfolge (SIF) zur Kodierung des Präambel-Subsymbols (C) übertragbar ist, bei welcher der Einzelsignalimpuls mehrfach wiederholt wird und
der Netzwerkknoten (1) des drahtlosen Steuernetzwerkes zwischen den beiden Betriebsmodi umschaltbar ist.

21. Drahtloses Steuernetzwerk mit Netzwerkknoten (1), die Datenpakete (DP) übertragen,
wobei die Datenpakete (DP) zur Synchronisation jeweils eine Präambel (PPE) aufweisen, die aus einer vorbestimmten Anzahl von Präambelsymbolen (S) besteht;
wobei in einem ersten Betriebsmodus jeweils ein Präambel-Subsymbol (C) des Präambelsymbols (S) der Präambel (PPE) durch die Phasenlage eines übertragenen Einzelsignalimpulses kodiert ist;
**dadurch gekennzeichnet, dass**
in einem zweiten Betriebsmodus zur Erhöhung einer Signalerkennungsleistung der in dem Datenpaket (DP) übertragenen Präambel (PPE) anstatt eines Einzelsignalimpulses eine aus einer vorbestimmten Anzahl N aufeinanderfolgenden Einzelsignalimpulsen gleicher Phasenlage bestehende Signalimpulsfolge (SIF) zur Kodierung des Präambel-Subsymbols (C) übertragbar ist, bei welcher der Einzelsignalimpuls mehrfach wiederholt wird und
der Netzwerkknoten (1) des drahtlosen Steuernetzwerkes für einen bestimmten Betriebsmodus der beiden Betriebsmodi, insbesondere den zweiten Betriebsmodus, vorkonfigurierbar ist.

## Claims

1. Method for wire-free transmission of data packets (DP) of a network node (1) in a control network,
wherein the data packets (DP) each have a preamble (PPE) for synchronisation, said preamble consisting of a predetermined number of preamble symbols (S);
wherein, in a first operating mode, each preamble subsymbol (C) of the preamble symbol (S) in the preamble (PPE) is coded by the phase angle of a transmitted single signal pulse;
**characterised in that**,
in a second operating mode, in order to increase a signal recognition performance for the preamble (PPE) which is transmitted in the data packet (DP), a signal pulse sequence (SIF), consisting of a predetermined number (N) of consecutive single signal pulses of the same phase angle, for coding the preamble subsymbol (C) is transmitted instead of a single signal pulse, in which single pulse sequence the single signal pulse is transmitted repeatedly and the network node (1) is switched between the two operating modes.

2. Method for wire-free transmission of data packets (DP) of a network node (1) in a control network,
wherein the data packets (DP) each have a preamble (PPE) for synchronisation, said preamble consisting of a predetermined number of preamble symbols (S);
wherein, in a first operating mode, each preamble subsymbol (C) of the preamble symbol (S) in the preamble (PPE) is coded by the phase angle of a transmitted single signal pulse;
**characterised in that**,
in a second operating mode, in order to increase a signal recognition performance for the preamble (PPE) which is transmitted in the data packet (DP), a signal pulse sequence (SIF), consisting of a predetermined number (N) of consecutive single signal pulses of the same phase angle, for coding the preamble subsymbol (C) is transmitted instead of a single signal pulse, in which single pulse sequence the single signal pulse is transmitted repeatedly and the network node (1) is preconfigured for one specific operating mode of the two operating modes, especially for the second operating mode.

3. Method according to claim 1 or 2,
wherein the single signal pulse or the signal pulse sequence (SIF) is each time followed by a signal pause (SP), which is provided to avoid intersymbol interference between the preamble subsymbols (C).

4. Method according to claim 1, 2 or 3,
wherein each preamble symbol (S) is ternary coded by a predetermined number of preamble subsymbols (C), wherein the single signal pulse and the signal pulses of the signal pulse sequence (SIF) each have a leading sign.

5. Method according to claim 4,
wherein the leading signs of the signal pulses of a received data packet (DP) are detected to reduce the data packet loss rate.

6. Method according to one of the preceding claims 1 to 5, wherein, in the first operating mode, each preamble subsymbol (C) has a single signal pulse with a predetermined pulse duration;
wherein the single signal pulse is followed by a signal pause (SP), the duration of which is longer than the pulse duration of the single signal pulse by a first spreading factor (L1).

7. Method according to one of the preceding claims 1 to 6, wherein, in the second operating mode, each preamble subsymbol (C) has the signal pulse sequence (SIF) consisting of the predetermined number (N) of consecutive single signal pulses with the same phase angle;
wherein each single signal pulse in the signal pulse sequence (SIF) has a predetermined pulse duration; wherein the signal pulse sequence (SIF) is followed by a signal pause (SP), the duration of which is longer than the duration of the signal pulse sequence (SIF) by a second spreading factor (L2) or the duration of which corresponds to the duration of a preamble subsymbol (C) in the first operating mode minus the duration of the signal pulse sequence (SIF).

8. Method according to one of the preceding claims 1 to 7, wherein, in the first operating mode, each preamble subsymbol (C) of a preamble symbol (S) in the preamble (PPE) is coded in conformity with the standard IEEE 802.15.4a by the phase angle of a transmitted single signal pulse.

9. Method according to one of the preceding claims 1 to 8, wherein the single signal pulse transmitted in the first operating mode and the signal pulses of the signal pulse sequence (SIF) transmitted in the second operating mode have a pulse shape, the phase angle of which is clearly derived from the polarity of a spectral pulse response.

10. Method according to claim 9,
wherein the pulse shape is a Gaussian pulse shape, a Gaussian doublet pulse shape or a root raised cosine pulse shape.

11. Method according to one of the preceding claims 1 to 10, wherein the preamble (PPE) of the data packet (DP) has a synchronisation header (SYNC) with 2ⁿ¹ preamble symbols and a start frame delimiter (SFD) with 2ⁿ² preamble symbols, wherein n₁, n₂ are natural numbers.

12. Method according to claim 11,
wherein the synchronisation header (SYNC) of the preamble (PRE) of a data packet (DP) received by a network node (1) of the control network is used to calculate a first correlation value (KW1) by means of a SYNC correlation device (11), in dependence on which a receiving amplifier within an RF stage (6) of the network node (1) is set.

13. Method according to claim 11,
wherein the start frame delimiter (SFD) in the preamble (PRE) of a data packet (DP) received by a network node (1) of the control network is used to calculate a second correlation value (KW2) by means of an SFD correlation device for the detection of the start of useful data within the data packet (DP).

14. Method according to one of the preceding claims 1 to 13, wherein the pulse duration of the single signal pulse is 2 nsec.

15. Method according to one of the preceding claims 1 to 14, wherein, in the second operating mode, the number (N) of the consecutive single signal pulses of the signal pulse sequence (SIF) is N = 4.

16. Apparatus (2, 3) for wire-free transmission of data packets (DP) of a network node (1) in a control network, with means (6-15, 17-23) for controlling the data packet transmission, which are embodied and connected to one another such that
the data packets (DP) each have a preamble (PPE) for synchronisation, wherein the preamble consists of a predetermined number of preamble symbols (S);
in a first operating mode, each preamble subsymbol (C) of the preamble symbol (S) in the preamble (PPE) is coded by the phase angle of a transmitted single signal pulse; **characterised in that**
the means (6-15, 17-23) for controlling the data packet transmission are embodied and connected to one another such that,
in a second operating mode, in order to increase a signal recognition performance for the preamble (PPE) which is transmitted in the data packet (DP), a signal pulse sequence (SIF), consisting of a predetermined number (N) of consecutive single signal pulses of the same phase angle, for coding the preamble subsymbol (C) is transmitted instead of a single signal pulse, in which single pulse sequence the single signal pulse is transmitted repeatedly and the network node (1) is switched between the two operating modes.

17. Apparatus (2, 3) for wire-free transmission of data packets (DP) of a network node (1) in a control network, with means (6-15, 17-23) for controlling the data packet transmission, which are embodied and connected to one another such that
the data packets (DP) each have a preamble (PPE) for synchronisation, wherein the preamble consists of a predetermined number of preamble symbols (S);
in a first operating mode, each preamble subsymbol (C) of the preamble symbol (S) in the preamble (PPE) is coded by the phase angle of a transmitted single signal pulse; **characterised in that**
the means (6-15, 17-23) for controlling the data packet transmission are embodied and connected to one another such that,
in a second operating mode, in order to increase a signal recognition performance for the preamble (PPE) which is transmitted in the data packet (DP), a signal pulse sequence (SIF) consisting of a predetermined number (N) of consecutive single signal pulses of the same phase angle, for coding the preamble subsymbol (C) is transmitted instead of a single signal pulse, in which single pulse sequence the single signal pulse is transmitted repeatedly and the network node (1) is preconfigured for one specific operating mode of the two operating modes, especially for the second operating mode.

18. Network node (1) for wire-free transmission of data packets (DP),
wherein the data packets (DP) each have a preamble (PPE) for synchronisation, said preamble consisting of a predetermined number of preamble symbols (S);
wherein, in a first operating mode, each preamble subsymbol (C) of the preamble symbol (S) in the preamble (PPE) is coded by the phase angle of a transmitted single signal pulse;
**characterised in that**,
in a second operating mode, in order to increase a signal recognition performance for the preamble (PPE) which is transmitted in the data packet (DP), a signal pulse sequence (SIF), consisting of a predetermined number (N) of consecutive single signal pulses of the same phase angle, for coding the preamble subsymbol (C) is able to be transmitted instead of a single signal pulse, in which single pulse sequence the single signal pulse is transmitted repeatedly and the network node (1) is able to be switched between the two operating modes.

19. Network node (1) for wire-free transmission of data packets (DP),
wherein the data packets (DP) each have a preamble (PPE) for synchronisation, said preamble consisting of a predetermined number of preamble symbols (S);
wherein, in a first operating mode, each preamble subsymbol (C) of the preamble symbol (S) in the preamble (PPE) is coded by the phase angle of a transmitted single signal pulse;
**characterised in that**,
in a second operating mode, in order to increase a signal recognition performance for the preamble (PPE) which is transmitted in the data packet (DP), a signal pulse sequence (SIF), consisting of a predetermined number (N) of consecutive single signal pulses of the same phase angle, for coding the preamble subsymbol (C) is able to be transmitted instead of a single signal pulse, in which single pulse sequence the single signal pulse is transmitted repeatedly and the network node (1) is able to be preconfigured for one specific operating mode of the two operating modes, especially for the second operating mode.

20. Wire-free control network with network nodes (1), which transmit data packets (DP),
wherein the data packets (DP) each have a preamble (PRE) for synchronisation, said preamble consisting of a predetermined number of preamble symbols (S);
wherein, in a first operating mode, each preamble subsymbol (C) of the preamble symbol (S) in the preamble (PRE) is coded by the phase angle of a transmitted single signal pulse;
**characterised in that**, in a second operating mode, in order to increase a signal recognition performance for the preamble (PRE) which is transmitted in the data packet (DP), a signal pulse sequence (SIF), consisting of a predetermined number (N) of consecutive single signal pulses of the same phase angle, for coding the preamble subsymbol (C) is able to be transmitted instead of a single signal pulse, in which single pulse sequence the single signal pulse is transmitted repeatedly and the network node (1) of the wire-free control network is able to be switched between the two operating modes.

21. Wire-free control network with network nodes (1), which transmit data packets (DP),
wherein the data packets (DP) each have a preamble (PPE) for synchronisation, said preamble consisting of a predetermined number of preamble symbols (S);
wherein, in a first operating mode, each preamble subsymbol (C) of the preamble symbol (S) in the preamble (PPE) is coded by the phase angle of a transmitted single signal pulse;
**characterised in that**, in a second operating mode, in order to increase a signal recognition performance for the preamble (PPE) which is transmitted in the data packet (DP), a signal pulse sequence (SIF), consisting of a predetermined number (N) of consecutive single signal pulses of the same phase angle, for coding the preamble subsymbol (C) is able to be transmitted instead of a single signal pulse, in which single pulse sequence the single signal pulse is transmitted repeatedly and the network node (1) of the wire-free control network is able to be preconfigured for one specific operating mode of the two operating modes, especially for the second operating mode.

## Revendications

1. Procédé pour la transmission sans fil de paquets de données (DP) d'un noeud de réseau (1) dans un réseau de commande, dans lequel les paquets de données (DP) présentent respectivement un préambule (PPE) pour la synchronisation, qui est composé d'un nombre prédéterminé de symboles de préambule (S),
dans lequel dans un premier mode de fonctionnement, respectivement un sous-symbole de préambule (C) du symbole de préambule (S) du préambule (PPE) est codé par le phasage d'une impulsion de signal unique transmise,
**caractérisé en ce que**
dans un deuxième mode de fonctionnement pour augmenter une puissance de détection de signal du préambule (PPE) transmis dans le paquet de données (DP), au lieu d'une impulsion de signal unique, une suite d'impulsions de signal (SIF) composée d'un nombre (N) prédéterminé d'impulsions de signal uniques consécutives de même phasage est transmise pour coder le sous-symbole de préambule (C), dans laquelle l'impulsion de signal unique est répétée plusieurs fois et le noeud de réseau (1) est basculé entre les deux modes de fonctionnement.

2. Procédé pour la transmission sans fil de paquets de données (DP) d'un noeud de réseau (1) dans un réseau de commande, dans lequel les paquets de données (DP) présentent respectivement un préambule (PPE) pour la synchronisation, qui est composé d'un nombre prédéterminé de symboles de préambule (S),
dans lequel dans un premier mode de fonctionnement, respectivement un sous-symbole de préambule (C) du symbole de préambule (S) du préambule (PPE) est codé par le phasage d'une impulsion de signal unique transmise,
**caractérisé en ce que**
dans un deuxième mode de fonctionnement pour augmenter une puissance de détection de signal du préambule (PPE) transmis dans le paquet de données (DP), au lieu d'une impulsion de signal unique, une suite d'impulsions de signal (SIF) composée d'un nombre (N) prédéterminé d'impulsions de signal uniques consécutives de même phasage est transmise pour coder le sous-symbole de préambule (C), dans laquelle l'impulsion de signal unique est répétée plusieurs fois et le noeud de réseau (1) est pré-configuré pour un mode de fonctionnement précis des deux modes de fonctionnement, en particulier le deuxième mode de fonctionnement.

3. Procédé selon la revendication 1 ou 2,
dans lequel l'impulsion de signal unique ou la suite d'impulsions de signal (SIF) est suivie respectivement d'une pause de signal (SP) qui est prévue pour éviter une interférence inter-symbole entre les sous-symboles de préambule (C).

4. Procédé selon la revendication 1, 2 ou 3,
dans lequel chaque symbole de préambule (S) est codé en ternaire par un nombre prédéterminé de sous-symboles de préambule (C), dans lequel l'impulsion de signal unique et les impulsions de signal de la suite d'impulsions de signal (SIF) présentent respectivement un caractère de signe.

5. Procédé selon la revendication 4,
dans lequel les caractères de signe des impulsions de signal d'un paquet de données (DP) reçu sont détectés pour réduire les taux de pertes de paquets de données.

6. Procédé selon l'une des revendications 1 à 5,
dans lequel chaque sous-symbole de préambule (C) présente une impulsion de signal unique avec une durée d'impulsion prédéterminée dans le premier mode de fonctionnement ;
dans lequel l'impulsion de signal unique est suivie d'une pause de signal (SP) dont la durée est plus longue d'un premier facteur d'étalement (L1) que la durée d'impulsion de l'impulsion de signal unique.

7. Procédé selon l'une des revendications 1 à 6,
dans lequel chaque sous-symbole de préambule (C) présente la suite d'impulsions de signal (SIF) composée du nombre (N) prédéterminé d'impulsions de signal uniques consécutives de même phasage dans le deuxième mode de fonctionnement ; dans lequel chaque impulsion de signal unique de la suite d'impulsions de signal (SIF) présente une durée d'impulsion prédéterminée ; dans lequel la suite d'impulsions de signal (SIF) est suivie d'une pause de signal (SP) dont la durée est plus longue d'un deuxième facteur d'étalement (L2) que la durée de la suite d'impulsions de signal (SIF) ou dont la durée correspond à la durée d'un sous-symbole de préambule (C) dans le premier mode déduction faite de la durée de la suite d'impulsions de signal (SIF).

8. Procédé selon l'une des revendications 1 à 7,
dans lequel dans le premier mode de fonctionnement, chaque sous-symbole de préambule (C) d'un symbole de préambule (S) du préambule (PPE) est codé en conformité de norme conformément à la norme IEEE 802.15.4a par le phasage d'une impulsion de signal unique transmise.

9. Procédé selon l'une des revendications 1 à 8,
dans lequel l'impulsion de signal unique transmise dans le premier mode de fonctionnement et les impulsions de signal de la suite d'impulsions de signal (SIF) transmises dans le deuxième mode de fonctionnement présentent une forme d'impulsion dont le phasage découle explicitement de la polarité d'une réponse impulsionnelle spectrale.

10. Procédé selon la revendication 9,
dans lequel la forme d'impulsion est une forme d'impulsion Gauss, une forme d'impulsion Doublet de Gauss ou une forme d'impulsion Root-Raised Cosine.

11. Procédé selon l'une des revendications 1 à 10,
dans lequel le préambule (PPE) du paquet de données (DP) présente un en-tête de synchronisation (SYNC) avec 2ⁿ¹ symboles de préambule et un délimiteur de trame de départ (SFD) avec 2ⁿ² symboles de préambule, dans lequel n₁, n₂ sont des nombres naturels.

12. Procédé selon la revendication 11,
dans lequel à l'aide de l'en-tête (SYNC) du préambule (PRE) d'un paquet de données (DP), reçu par un noeud de réseau (1) du réseau de commande, une première valeur de corrélation (KW1) est calculée au moyen d'un dispositif de corrélation SYNC (11), en fonction de laquelle un amplificateur de réception est réglé dans un degré de HF (6) du noeud de réseau (1).

13. Procédé selon la revendication 11,
dans lequel à l'aide du délimiteur de trame de départ (SFD) du préambule (PRE) d'un paquet de données (DP), reçu par un noeud de réseau (1) du réseau de commande, une deuxième valeur de corrélation (KW2) est calculée au moyen d'un dispositif de corrélation SFD, pour détecter le début de données utiles à l'intérieur du paquet de données (DP).

14. Procédé selon l'une des revendications 1 à 13,
dans lequel la durée d'impulsion de l'impulsion de signal unique est de 2 nsec.

15. Procédé selon l'une des revendications 1 à 14,
dans lequel dans le deuxième mode de fonctionnement, le nombre (N) des impulsions de signal uniques consécutives de la suite d'impulsions de signal (SIF) est de N = 4.

16. Dispositif (2, 3) pour la transmission sans fil de paquets de données (DP) d'un noeud de réseau (1) dans un réseau de commande, comprenant des moyens (6-15, 17-23) pour commander la transmission des paquets de données, qui sont ainsi conçus et reliés entre eux que les paquets de données (DP) qui présentent respectivement un préambule (PPE), dans lequel le préambule est composé d'un nombre prédéterminé de symboles de préambule (S), sont synchronisés,
dans un premier mode de fonctionnement, respectivement un sous-symbole de préambule (C) du symbole de préambule (S) du préambule (PPE) est codé par le phasage d'une impulsion de signal unique transmise ;
**caractérisé en ce que**
les moyens (6-15, 17-23) pour commander la transmission des paquets de données sont ainsi conçus et reliés entre eux que dans un deuxième mode de fonctionnement pour augmenter une puissance de détection de signal du préambule (PPE) transmis dans le paquet de données (DP), au lieu d'une impulsion de signal unique, une suite d'impulsions de signal (SIF) composée d'un nombre (N) prédéterminé d'impulsions de signal uniques consécutives de même phasage est transmise pour coder le sous-symbole de préambule (C), dans laquelle l'impulsion de signal unique est répétée plusieurs fois et le noeud de réseau (1) est basculé entre les deux modes de fonctionnement.

17. Dispositif (2, 3) pour la transmission sans fil de paquets de données (DP) d'un noeud de réseau (1) dans un réseau de commande, comprenant des moyens (6-15, 17-23) pour commander la transmission des paquets de données, qui sont ainsi conçus et reliés entre eux que
les paquets de données (DP) qui présentent respectivement un préambule (PPE), dans lequel le préambule est composé d'un nombre prédéterminé de symboles de préambule (S), sont synchronisés,
dans un premier mode de fonctionnement, respectivement un sous-symbole de préambule (C) du symbole de préambule (S) du préambule (PPE) est codé par le phasage d'une impulsion de signal unique transmise ;
**caractérisé en ce que**
les moyens (6-15, 17-23) pour commander la transmission des paquets de données sont ainsi conçus et reliés entre eux que dans un deuxième mode de fonctionnement pour augmenter une puissance de détection de signal du préambule (PPE) transmis dans le paquet de données (DP), au lieu d'une impulsion de signal unique, une suite d'impulsions de signal (SIF) composée d'un nombre (N) prédéterminé d'impulsions de signal uniques consécutives de même phasage est transmise pour coder le sous-symbole de préambule (C), dans laquelle l'impulsion de signal unique est répétée plusieurs fois et le noeud de réseau (1) est pré-configuré pour un mode de fonctionnement précis des deux modes de fonctionnement, en particulier le deuxième mode de fonctionnement.

18. Noeud de réseau (1) pour la transmission sans fil de paquets de données (DP),
dans lequel les paquets de données (DP) présentent respectivement un préambule (PPE) pour la synchronisation, qui est composé d'un nombre prédéterminé de symboles de préambule (S),
dans lequel dans un premier mode de fonctionnement, respectivement un sous-symbole de préambule (C) du symbole de préambule (S) du préambule (PPE) est codé par le phasage d'une impulsion de signal unique transmise,
**caractérisé en ce que**
dans un deuxième mode de fonctionnement pour augmenter une puissance de détection de signal du préambule (PPE) transmis dans le paquet de données (DP), au lieu d'une impulsion de signal unique, une suite d'impulsions de signal (SIF) composée d'un nombre (N) prédéterminé d'impulsions de signal uniques consécutives de même phasage peut être transmise pour coder le sous-symbole de préambule (C), dans laquelle l'impulsion de signal unique est répétée plusieurs fois et le noeud de réseau (1) peut être basculé entre les deux modes de fonctionnement.

19. Noeud de réseau (1) pour la transmission sans fil de paquets de données (DP),
dans lequel les paquets de données (DP) présentent respectivement un préambule (PPE) pour la synchronisation, qui est composé d'un nombre prédéterminé de symboles de préambule (S),
dans lequel dans un premier mode de fonctionnement, respectivement un sous-symbole de préambule (C) du symbole de préambule (S) du préambule (PPE) est codé par le phasage d'une impulsion de signal unique transmise,
**caractérisé en ce que**
dans un deuxième mode de fonctionnement pour augmenter une puissance de détection de signal du préambule (PPE) transmis dans le paquet de données (DP), au lieu d'une impulsion de signal unique, une suite d'impulsions de signal (SIF) composée d'un nombre (N) prédéterminé d'impulsions de signal uniques consécutives de même phasage peut être transmise pour coder le sous-symbole de préambule (C), dans laquelle l'impulsion de signal unique est répétée plusieurs fois et le noeud de réseau (1) peut être pré-configuré pour un mode de fonctionnement précis des deux modes de fonctionnement, en particulier le deuxième mode de fonctionnement.

20. Réseau de commande sans fil comprenant des noeuds de réseau (1) qui transmettent des paquets de données (DP),
dans lequel les paquets de données (DP) présentent respectivement un préambule (PRE) pour la synchronisation, qui est composé d'un nombre prédéterminé de symboles de préambule (S),
dans lequel dans un premier mode de fonctionnement, respectivement un sous-symbole de préambule (C) du symbole de préambule (S) du préambule (PRE) est codé par le phasage d'une impulsion de signal unique transmise,
**caractérisé en ce que**
dans un deuxième mode de fonctionnement pour augmenter une puissance de détection de signal du préambule (PRE) transmis dans le paquet de données (DP), au lieu d'une impulsion de signal unique, une suite d'impulsions de signal (SIF) composée d'un nombre (N) prédéterminé d'impulsions de signal uniques consécutives de même phasage peut être transmise pour coder le sous-symbole de préambule (C), dans laquelle l'impulsion de signal unique est répétée plusieurs fois et le noeud de réseau (1) du réseau de commande sans fil peut être basculé entre les deux modes de fonctionnement.

21. Réseau de commande sans fil comprenant des noeuds de réseau (1) qui transmettent des paquets de données (DP),
dans lequel les paquets de données (DP) présentent respectivement un préambule (PPE) pour la synchronisation, qui est composé d'un nombre prédéterminé de symboles de préambule (S),
dans lequel dans un premier mode de fonctionnement, respectivement un sous-symbole de préambule (C) du symbole de préambule (S) du préambule (PPE) est codé
par le phasage d'une impulsion de signal unique transmise,
**caractérisé en ce que**
dans un deuxième mode de fonctionnement pour augmenter une puissance de détection de signal du préambule (PPE) transmis dans le paquet de données (DP), au lieu d'une impulsion de signal unique, une suite d'impulsions de signal (SIF) composée d'un nombre (N) prédéterminé d'impulsions de signal uniques consécutives de même phasage peut être transmise pour coder le sous-symbole de préambule (C), dans laquelle l'impulsion de signal unique est répétée plusieurs fois et le noeud de réseau (1) peut être pré-configuré pour un mode de fonctionnement précis des deux modes de fonctionnement, en particulier le deuxième mode de fonctionnement.
